# EUROPEAN PATENT APPLICATION

(11) **EP 4 395 422 A1**
(43) Date of publication of application: **03.07.2024**
(21) Application number: 22874708.5
(22) Date of filing: 20.09.2022
(51) Int. Cl.: H04W 52/02, H04W 68/02

(54) **SIGNAL TRANSMISSION METHOD AND APPARATUS**

(30) Priority: 28.09.2021 CN 202111146393; 05.11.2021 CN 202111305478
(71) Applicant: Huawei Technologies Co., Ltd., Shenzhen, Guangdong 518129 (CN)
(72) Inventor: XUE, Yifan, Shenzhen, Guangdong 518129 (CN); XUE, Lixia, Shenzhen, Guangdong 518129 (CN); LI, Qiang, Shenzhen, Guangdong 518129 (CN)
(74) Representative: Pfenning, Meinig & Partner mbB
(86) International application number: PCT/CN2022/119930
(87) International publication number: WO 2023/051321

(57) **Abstract**

Embodiments of this application provide a signal transmission method and an apparatus. The method may include: A terminal device determines a periodicity of a synchronization signal; and the terminal device periodically receives the synchronization signal based on the periodicity of the synchronization signal through a first frequency resource, where the first frequency resource is further used to transmit a wake-up signal, and the wake-up signal indicates information about one or more terminal devices that need to receive paging. According to this application, the terminal device performs time synchronization by using the received synchronization signal, so that the terminal device can correctly receive the wake-up signal, to avoid a case in which the terminal device cannot correctly receive the wake-up signal due to time asynchronization. The method provided in embodiments may be applied to communication systems such as 5G or NR, LTE, V2X, D2D, M2M, MTC, and internet of things.

## Description

This application claims priorities to Chinese Patent Application No. 202111305478.1, filed with the China National Intellectual Property Administration on November 5, 2021 and entitled "SIGNAL TRANSMISSION METHOD AND APPARATUS", and to Chinese Patent Application No. 202111146393.3, filed with the China National Intellectual Property Administration on September 28, 2021 and entitled "WUR SYNCHRONIZATION METHOD", both of which are incorporated herein by reference in their entireties.

### TECHNICAL FIELD

This application relates to the communication field, and more specifically, to a signal transmission method and an apparatus.

### BACKGROUND

A terminal device may receive a wake-up signal via a separate low-power small circuit, for example, a wake-up receiver (wake-up receiver, WUR), and a main receiver may be in a deep sleep state. After the terminal device detects the wake-up signal via the WUR, the terminal device triggers wake-up of the main receiver. After the main receiver is woken up, the terminal device may perform a paging (paging) receiving process via the main receiver, for example, receive a paging message. Therefore, how to correctly receive the wake-up signal is particularly important.

### SUMMARY

This application provides a signal transmission method and an apparatus, so that a terminal device performs time synchronization by using a received synchronization signal, and can correctly receive a wake-up signal, to avoid a case in which the terminal device cannot correctly receive the wake-up signal due to time asynchronization.

According to a first aspect, a signal transmission method is provided. The method may be performed by a terminal device, or may be performed by a component (for example, a chip or a circuit) of a terminal device. This is not limited herein. For ease of description, the following uses an example in which the terminal device performs the method for description.

The method may include: The terminal device determines a periodicity of a synchronization signal; and the terminal device periodically receives the synchronization signal based on the periodicity of the synchronization signal through a first frequency resource, where the first frequency resource is further used to transmit a wake-up signal, and the wake-up signal indicates information about one or more terminal devices that need to receive paging.

Based on the foregoing solution, the terminal device periodically receives the synchronization signal, and the terminal device may perform time synchronization by using the received synchronization signal, so that the terminal device can correctly receive the wake-up signal. In addition, in this application, the terminal device periodically receives the synchronization signal. This can reduce resource overheads for the synchronization signal. Specifically, in a cellular network, a network device is used as a central control node. Therefore, each terminal device may perform time synchronization with a same network device. The network device periodically sends the synchronization signal, so that all terminal devices in the network can share a same synchronization signal. This can reduce resource overheads for the synchronization signal. In addition, compared with a manner in which a synchronization signal is sent together, that is, a manner in which data information is definitely transmitted after the synchronization signal, in this application, the network device periodically sends the synchronization signal on a wake-up link. In other words, the synchronization signal does not need to be sent together, but is separately and periodically sent. In other words, in this application, there is no data information followed by the synchronization signal. Therefore, the network device does not need to send the synchronization signal when sending the data information, and may send the synchronization signal based on the periodicity of the synchronization signal, so that the terminal device can complete time synchronization before receiving the wake-up signal. In addition, if the synchronization signal is sent together, whether the terminal device can receive the synchronization signal depends on whether the network device currently sends data, and a delay in obtaining synchronization by the terminal device after the terminal device switches from a main link to the wake-up link cannot be ensured. According to this application, after switching from the main link to the wake-up link, the terminal device may quickly obtain time synchronization by using the periodically sent synchronization signal.

With reference to the first aspect, in some implementations of the first aspect, the periodicity of the synchronization signal is associated with a transmission parameter of the wake-up signal.

For example, the transmission parameter of the wake-up signal includes a time domain resource length or a subcarrier spacing.

For example, the transmission parameter of the wake-up signal is received by the terminal device via a second module.

For example, the terminal device receives system information from the network device, where the system information includes the transmission parameter of the wake-up signal.

Based on the foregoing solution, the periodicity of the synchronization signal is associated with the transmission parameter of the wake-up signal, so that a corresponding periodicity can be determined based on the transmission parameter of the wake-up signal.

With reference to the first aspect, in some implementations of the first aspect, the transmission parameter of the wake-up signal includes a time domain resource length, the time domain resource length includes a first time domain resource length and a second time domain resource length, a first periodicity of the synchronization signal is associated with the first time domain resource length, a second periodicity of the synchronization signal is associated with the second time domain resource length, the first time domain resource length is less than the second time domain resource length, and the first periodicity is less than the second periodicity.

Based on the foregoing solution, a longer time domain resource length of the wake-up signal may indicate a longer periodicity T. After completing synchronization by using a synchronization signal, the terminal device does not perform synchronization before receiving a next synchronization signal. Because local clock precision of a receiver in the terminal device is limited, time offset between the terminal device and a network side becomes increasingly large between two synchronization signals. If the wake-up signal is modulated in a modulation scheme (for example, OOK), demodulation performance of the wake-up signal is affected by the time domain resource length (for example, a symbol length). A longer time domain resource length indicates higher tolerance of residual time offset. Therefore, when a time offset change rate is fixed, a longer time domain resource length indicates longer time in which "reception performance can be ensured without performing time synchronization again", and a corresponding periodicity of the synchronization signal may be set to a larger value.

With reference to the first aspect, in some implementations of the first aspect, the transmission parameter of the wake-up signal includes a subcarrier spacing, the subcarrier spacing includes a first subcarrier spacing and a second subcarrier spacing, a first periodicity of the synchronization signal is associated with the first subcarrier spacing, a second periodicity of the synchronization signal is associated with the second subcarrier spacing, the first subcarrier spacing is greater than the second subcarrier spacing, and the first periodicity is less than the second periodicity.

Based on the foregoing solution, a smaller subcarrier spacing of the wake-up signal may indicate a longer periodicity T.

With reference to the first aspect, in some implementations of the first aspect, the periodicity of the synchronization signal is configured by the network device, or the periodicity of the synchronization signal is predefined in a standard.

Based on the foregoing solution, if the periodicity of the synchronization signal is configured by the network device, the network device may flexibly select a proper periodicity T, to control resource overheads for the synchronization signal. If the periodicity of the synchronization signal is predefined (for example, predefined in the standard), the network device or the terminal device may determine the periodicity of the synchronization signal based on the predefined (for example, predefined in the standard). This reduces signaling overheads caused by notifying the periodicity T by the network device.

With reference to the first aspect, in some implementations of the first aspect, if the periodicity of the synchronization signal is configured by the network device, the method further includes: The terminal device receives first configuration information, where the first configuration information is used to configure the periodicity of the synchronization signal.

Based on the foregoing solution, the periodicity of the synchronization signal is configured by the network device, and the network device may send the periodicity of the synchronization signal to the terminal device, and the terminal device can learn of the periodicity of the synchronization signal, and periodically receive the synchronization signal based on the periodicity of the synchronization signal.

With reference to the first aspect, in some implementations of the first aspect, the method further includes: The terminal device receives second configuration information, where the second configuration information is used to configure a pattern pattern of the synchronization signal; and that the terminal device periodically receives the synchronization signal based on the periodicity of the synchronization signal through a first frequency resource includes: the terminal device receives the synchronization signal based on the periodicity of the synchronization signal and the pattern of the synchronization signal through the first frequency resource.

Based on the foregoing solution, flexibility of the periodicity of the synchronization signal can be improved. For example, if the periodicity of the synchronization signal is predefined in the standard, once the transmission parameter is determined, the periodicity of the synchronization signal is determined accordingly. This may limit network deployment on the first link. By configuring the pattern of the synchronization signal, the network device can flexibly configure an actual sending periodicity of the synchronization signal. This can improve flexibility.

With reference to the first aspect, in some implementations of the first aspect, the method further includes: The terminal device receives a first signal and/or sends a second signal at a first time domain location through the first frequency resource, where a time domain location at which the synchronization signal is sent and that is represented by the pattern of the synchronization signal does not include the first time domain location.

For example, the first signal includes one or more of the following: a synchronization signal block SSB, a physical downlink control channel PDCCH, a physical downlink shared channel PDSCH, a channel state information-reference signal CSI-RS, a phase tracking reference signal PT-RS, a positioning reference signal PRS, and a demodulation reference signal DMRS.

For example, the second signal includes one or more of the following: a demodulation reference signal DMRS, a physical uplink shared channel PUSCH, a physical uplink control channel PUCCH, and a sounding reference signal SRS.

For example, a modulation scheme of the first signal is OFDM modulation or DFT-s-OFDM modulation.

For example, a modulation scheme of the second signal is OFDM modulation or DFT-s-OFDM modulation.

Based on the foregoing solution, if the terminal device receives the wake-up signal and the synchronization signal on the first link (a frequency corresponding to the first link includes the first frequency resource), a resource occupation ratio for the first link can be reduced, so that signals (for example, the wake-up signal and the synchronization signal) on the first link and another signal (for example, the first signal and/or the second signal) can be transmitted in a time-division multiplexing (time-division multiplexing, TDM) mode. That is, at a same frequency location, the signal on the first link is received in a period of time, and a signal (for example, the first signal) is sent in another period of time.

With reference to the first aspect, in some implementations of the first aspect, the terminal device includes a first module and a second module; and the terminal device receives a synchronization signal and a wake-up signal via the first module, and the terminal device receives the first signal and/or sends the second signal via the second module.

Based on the foregoing solution, the terminal device may receive the synchronization signal and the wake-up signal via the first module, and receive and/or send another signal via the second module, so that symbol boundaries of the synchronization signal and the wake-up signal are aligned with a symbol boundary of an existing signal (for example, the first signal or the second signal). This can reduce an interference level.

With reference to the first aspect, in some implementations of the first aspect, that the terminal device periodically receives the synchronization signal based on the periodicity of the synchronization signal through a first frequency resource includes: The terminal device receives, based on the periodicity of the synchronization signal, the synchronization signal at a first moment through the first frequency resource, where the synchronization signal indicates a data rate of the wake-up signal in a first time period, and the first time period is after the first moment.

Based on the foregoing solution, the data rate of the wake-up signal is learned of by using the synchronization signal.

With reference to the first aspect, in some implementations of the first aspect, a length of the synchronization signal indicates the data rate of the wake-up signal in the first time period.

Based on the foregoing solution, the length of the synchronization signal may be associated with the data rate of the wake-up signal, and the terminal device may learn of the data rate of the wake-up signal in the first time period through the length of the synchronization signal. Therefore, the terminal device may blindly detect the length of the synchronization signal, to determine a data rate of a subsequent wake-up signal. This reduces signaling overheads caused by notifying the data rate of the wake-up signal by the network device.

With reference to the first aspect, in some implementations of the first aspect, the synchronization signal includes first indication information, and the first indication information indicates the data rate of the wake-up signal in the first time period.

Based on the foregoing solution, in addition to a sequence used for a synchronization function, the synchronization signal may further include the first indication information. The first indication information indicates the data rate of the wake-up signal in a subsequent time period (for example, the first time period). In this solution, a synchronization signal with one length may be designed.

With reference to the first aspect, in some implementations of the first aspect, the length of the synchronization signal includes a length of a first synchronization signal and a length of a second synchronization signal, the length of the first synchronization signal indicates that the data rate of the wake-up signal in the first time period is a first data rate, the length of the second synchronization signal indicates that the data rate of the wake-up signal in the first time period is a second data rate, the length of the first synchronization signal is less than the length of the second synchronization signal, and the first data rate is higher than the second data rate.

Based on the foregoing solution, synchronization signals with different lengths may correspond to different data rates. For example, a longer length of the synchronization signal indicates a higher data rate of the wake-up signal.

With reference to the first aspect, in some implementations of the first aspect, the first time period is after the first moment and before a second moment, the second moment is a moment at which the terminal device receives an i^{th} synchronization signal after the first moment, and i is an integer greater than or equal to 1.

For example, i is 1.

With reference to the first aspect, in some implementations of the first aspect, the method further includes: The terminal device receives, the wake-up signal through the first frequency resource, where the wake-up signal includes second indication information, and the second indication information indicates a data rate of the wake-up signal.

Based on the foregoing solution, the data rate of the wake-up signal is learned of by using the wake-up signal.

With reference to the first aspect, in some implementations of the first aspect, the second indication information specifically indicates a data rate of information other than the second indication information in the wake-up signal, and a data rate of the second indication information is configured by the network device or predefined.

For example, the second indication information is located at the beginning of a wake-up signal (for example, a start location, or a location before paging information).

With reference to the first aspect, in some implementations of the first aspect, the length of the synchronization signal includes the length of the first synchronization signal and the length of the second synchronization signal, the length of the first synchronization signal is less than the length of the second synchronization signal, and a periodicity of the first synchronization signal is less than a periodicity of the second synchronization signal.

Based on the foregoing solution, the synchronization signal may include a plurality of signals with different lengths, such as, the first synchronization signal and the second synchronization signal, so that a synchronization signal with a proper length may not only be selected based on an actual situation for sending, but also be further used in different channel statuses to serve terminal devices in different channel statuses.

With reference to the first aspect, in some implementations of the first aspect, the periodicity of the second synchronization signal is an integer multiple of the periodicity of the first synchronization signal, and a time interval between receiving the second synchronization signal by the terminal device and receiving the first synchronization signal by the terminal device is the same as the periodicity of the first synchronization signal.

With reference to the first aspect, in some implementations of the first aspect, a waveform of the synchronization signal is the same as a waveform of the wake-up signal, and/or a modulation scheme of the synchronization signal is the same as a modulation scheme of the wake-up signal.

With reference to the first aspect, in some implementations of the first aspect, the modulation scheme of the synchronization signal and the modulation scheme of the wake-up signal are on-off keying OOK; and/or the waveform of the synchronization signal and/or the waveform of the wake-up signal are/is OOK.

With reference to the first aspect, in some implementations of the first aspect, the method further includes: The terminal device receives a wake-up signal from the network device through the first frequency resource, where the wake-up signal indicates the information about the one or more terminal devices that need to receive paging and includes the terminal device; and the terminal device receives first information from the network device and/or initiates random access, where the first information includes one or more of the following information: paging downlink control information DCI, a paging message paging message, and a paging early indication PEI.

For example, that the terminal device initiates random access includes: The terminal device sends a random access preamble sequence to the network device.

With reference to the first aspect, in some implementations of the first aspect, that the terminal device receives first information from the network device and/or initiates random access includes: The terminal device receives the first information from the network device and/or initiates random access through a second frequency resource.

With reference to the first aspect, in some implementations of the first aspect, the terminal device includes the first module and the second module; and the terminal device receives the synchronization signal and the wake-up signal via the first module, and the terminal device receives the first information and/or initiates random access via the second module.

With reference to the first aspect, in some implementations of the first aspect, the terminal device receives the synchronization signal and the wake-up signal through the first link, where a frequency resource corresponding to the first link includes the first frequency resource.

With reference to the first aspect, in some implementations of the first aspect, the terminal device receives the first information from the network device and/or initiates random access through the second link, where a frequency resource corresponding to the second link includes the second frequency resource.

With reference to the first aspect, in some implementations of the first aspect, the terminal device is in a first state (or uses a first mode), and receives the synchronization signal and the wake-up signal.

With reference to the first aspect, in some implementations of the first aspect, the terminal device is in a second state (or uses a second mode), and receives the first information and/or initiates random access.

According to a second aspect, a signal transmission method is provided. The method may be performed by a terminal device, or may be performed by a component (for example, a chip or a circuit) of a terminal device. This is not limited herein. For ease of description, the following uses an example in which the terminal device performs the method for description.

The method may include: The network device determines a periodicity of a synchronization signal; and the network device periodically sends the synchronization signal based on the periodicity of the synchronization signal through a first frequency resource, where the first frequency resource is further used to transmit a wake-up signal, and the wake-up signal indicates information about one or more terminal devices that need to receive paging.

Based on the foregoing solution, the network device periodically sends the synchronization signal, and the terminal device in a network may perform time synchronization by using the received synchronization signal, so that the wake-up signal can be correctly received. In addition, in this application, the terminal device periodically receives the synchronization signal. This can reduce resource overheads for the synchronization signal.

With reference to the second aspect, in some implementations of the second aspect, the periodicity of the synchronization signal is associated with a transmission parameter of the wake-up signal.

For example, the transmission parameter of the wake-up signal includes a time domain resource length or a subcarrier spacing.

For example, the transmission parameter of the wake-up signal is received by the terminal device via a second module.

With reference to the second aspect, in some implementations of the second aspect, the method further includes: The network device broadcasts system information, where the system information includes the transmission parameter of the wake-up signal.

Based on the foregoing solution, the network device may broadcast the transmission parameter of the wake-up signal, so that each terminal device in the network can receive the transmission parameter of the wake-up signal.

With reference to the second aspect, in some implementations of the second aspect, the transmission parameter of the wake-up signal includes a time domain resource length, the time domain resource length includes a first time domain resource length and a second time domain resource length, a first periodicity of the synchronization signal is associated with the first time domain resource length, a second periodicity of the synchronization signal is associated with the second time domain resource length, the first time domain resource length is less than the second time domain resource length, and the first periodicity is less than the second periodicity.

With reference to the second aspect, in some implementations of the second aspect, the transmission parameter of the wake-up signal includes a subcarrier spacing, the subcarrier spacing includes a first subcarrier spacing and a second subcarrier spacing, a first periodicity of the synchronization signal is associated with the first subcarrier spacing, a second periodicity of the synchronization signal is associated with the second subcarrier spacing, the first subcarrier spacing is greater than the second subcarrier spacing, and the first periodicity is less than the second periodicity.

With reference to the second aspect, in some implementations of the second aspect, the periodicity of the synchronization signal is configured by the network device, or the periodicity of the synchronization signal is predefined in a standard.

With reference to the second aspect, in some implementations of the second aspect, if the periodicity of the synchronization signal is configured by the network device, the method further includes: The network device sends first configuration information, where the first configuration information is used to configure the periodicity of the synchronization signal.

With reference to the second aspect, in some implementations of the second aspect, the method further includes: The network device sends second configuration information, where the second configuration information is used to configure a pattern pattern of the synchronization signal; and that the network device periodically sends the synchronization signal based on the periodicity of the synchronization signal through a first frequency resource includes: the network device sends the synchronization signal based on the periodicity of the synchronization signal and the pattern of the synchronization signal through the first frequency resource.

With reference to the second aspect, in some implementations of the second aspect, the method further includes: the network device sends a first signal and/or receives a second signal at a first time domain location through the first frequency resource, where a time domain location at which the synchronization signal is sent and that is represented by the pattern of the synchronization signal does not include the first time domain location.

For example, the first signal includes one or more of the following: a synchronization signal block SSB, a physical downlink control channel PDCCH, a physical downlink shared channel PDSCH, a channel state information-reference signal CSI-RS, a phase tracking reference signal PT-RS, a positioning reference signal PRS, and a demodulation reference signal DMRS.

For example, the second signal includes one or more of the following: a demodulation reference signal DMRS, a physical uplink shared channel PUSCH, a physical uplink control channel PUCCH, and a sounding reference signal SRS.

For example, a modulation scheme of the first signal is OFDM modulation or DFT-s-OFDM modulation.

For example, a modulation scheme of the second signal is OFDM modulation or DFT-s-OFDM modulation.

Based on the foregoing solution, if the network device sends the wake-up signal and the synchronization signal on a first link (a frequency corresponding to the first link includes the first frequency resource), a resource occupation ratio for the first link can be reduced, so that signals (for example, the wake-up signal and the synchronization signal) on the first link and another signal (for example, the first signal and/or the second signal) can be transmitted in a time-division multiplexing mode. That is, at a same frequency location, the signal on the first link is sent in a period of time, and the another signal (for example, the first signal) is sent in another period of time.

With reference to the second aspect, in some implementations of the second aspect, the network device includes a first module and a second module; and the network device sends the synchronization signal and the wake-up signal via the first module, and the network device sends the first signal and/or receives the second signal via the second module.

Based on the foregoing solution, the network device may send the synchronization signal and the wake-up signal via the first module, and receive and/or send another signal via the second module, so that symbol boundaries of the synchronization signal and the wake-up signal are aligned with a symbol boundary of an existing signal (for example, the first signal or the second signal). This can reduce an interference level.

With reference to the second aspect, in some implementations of the second aspect, that the network device periodically sends the synchronization signal based on the periodicity of the synchronization signal through a first frequency resource includes: The network device sends, based on the periodicity of the synchronization signal, the synchronization signal at a first moment through the first frequency resource, where the synchronization signal indicates a data rate of the wake-up signal in a first time period, and the first time period is after the first moment.

Based on the foregoing solution, the network device indicates, to the terminal device by using the synchronization signal, the data rate of the wake-up signal in a time period (for example, in the first time period).

With reference to the second aspect, in some implementations of the second aspect, a length of the synchronization signal indicates the data rate of the wake-up signal in the first time period.

Based on the foregoing solution, the length of the synchronization signal may be associated with the data rate of the wake-up signal. The network device may indicate, through the length of the synchronization signal, a data rate of the wake-up signal in a subsequent time period (for example, denoted as the first time period), so that the terminal device may learn of the data rate of the wake-up signal in the first time period through the length of the synchronization signal. Therefore, the terminal device may blindly detect the length of the synchronization signal, to determine a data rate of a subsequent wake-up signal. This reduces signaling overheads caused by notifying the data rate of the wake-up signal by the network device.

With reference to the second aspect, in some implementations of the second aspect, the synchronization signal includes first indication information, and the first indication information indicates the data rate of the wake-up signal in the first time period.

With reference to the second aspect, in some implementations of the second aspect, the length of the synchronization signal includes a length of a first synchronization signal and a length of a second synchronization signal, the length of the first synchronization signal indicates that the data rate of the wake-up signal in the first time period is a first data rate, the length of the second synchronization signal indicates that the data rate of the wake-up signal in the first time period is a second data rate, the length of the first synchronization signal is less than the length of the second synchronization signal, and the first data rate is higher than the second data rate.

With reference to the second aspect, in some implementations of the second aspect, the first time period is after the first moment and before a second moment, the second moment is a moment at which the network device sends an i^{th} synchronization signal after the first moment, and i is an integer greater than or equal to 1.

For example, i is 1.

With reference to the second aspect, in some implementations of the second aspect, the method further includes: The network device sends the wake-up signal through the first frequency resource, where the wake-up signal includes second indication information, and the second indication information indicates a data rate of the wake-up signal.

With reference to the second aspect, in some implementations of the second aspect, the second indication information specifically indicates a data rate of information other than the second indication information in the wake-up signal, and a data rate of the second indication information is configured by the network device or predefined.

For example, the second indication information is located at the beginning of a wake-up signal (for example, a start location, or a location before paging information).

With reference to the second aspect, in some implementations of the second aspect, the length of the synchronization signal includes the length of the first synchronization signal and the length of the second synchronization signal, the length of the first synchronization signal is less than the length of the second synchronization signal, and a periodicity of the first synchronization signal is less than a periodicity of the second synchronization signal.

With reference to the second aspect, in some implementations of the second aspect, the periodicity of the second synchronization signal is an integer multiple of the periodicity of the first synchronization signal, and a time interval between sending the second synchronization signal by the network device and sending the first synchronization signal by the network device is the same as the periodicity of the first synchronization signal.

With reference to the second aspect, in some implementations of the second aspect, a waveform of the synchronization signal is the same as a waveform of the wake-up signal, and/or a modulation scheme of the synchronization signal is the same as a modulation scheme of the wake-up signal.

With reference to the second aspect, in some implementations of the second aspect, the modulation scheme of the synchronization signal and the modulation scheme of the wake-up signal are on-off keying OOK; and/or the waveform of the synchronization signal and/or the waveform of the wake-up signal are/is OOK.

With reference to the second aspect, in some implementations of the second aspect, the method further includes: The network device sends a wake-up signal through the first frequency resource, where the wake-up signal indicates information about the one or more terminal devices that need to receive paging, and the one or more terminal devices include the first terminal device; and the network device sends first information to the first terminal device and/or receives a random access preamble sequence from the first terminal device, where the first information includes one or more of the following information: paging downlink control information DCI, a paging message paging message, and a paging early indication PEI.

With reference to the second aspect, in some implementations of the second aspect, that the network device sends first information to a first terminal device and/or receives a random access preamble sequence from the first terminal device includes: The network device sends the first information to the first terminal device and/or receives the random access preamble sequence from the first terminal device through a second frequency resource.

With reference to the second aspect, in some implementations of the second aspect, the network device includes the first module and the second module; and the network device sends the synchronization signal and the wake-up signal via the first module, and the network device sends the first information to the first terminal device and/or receives the random access preamble sequence from the first terminal device via the second module.

For beneficial effect of the second aspect and the possible designs, refer to the related descriptions in the first aspect. Details are not described herein again.

According to a third aspect, a communication apparatus is provided. The apparatus is configured to perform the method according to any possible implementation of the first aspect or the second aspect. Specifically, the apparatus may include units and/or modules, such as a processing unit and/or a communication unit, configured to perform the method according to any possible implementation of the first aspect or the second aspect.

In an implementation, the apparatus is a communication device (for example, a terminal device or a network device). When the apparatus is the communication device, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a communication device (for example, a terminal device or a network device). When the apparatus is the chip, the chip system, or the circuit used in the communication device, the communication unit may be an input/output interface, an interface circuit, an output circuit, an input circuit, a pin, a related circuit, or the like on the chip, the chip system, or the circuit; and the processing unit may be at least one processor, a processing circuit, a logic circuit, or the like.

According to a fourth aspect, a communication apparatus is provided. The apparatus includes at least one processor, configured to execute a computer program or instructions stored in a memory, to perform the method according to any possible implementation of the first aspect or the second aspect. Optionally, the apparatus further includes a memory, configured to store a computer program or instructions. Optionally, the apparatus further includes a communication interface, and the processor reads, through the communication interface, a computer program or instructions stored in the memory.

In an implementation, the apparatus is a communication device (for example, a terminal device or a network device).

In another implementation, the apparatus is a chip, a chip system, or a circuit used in a communication device (for example, a terminal device or a network device).

According to a fifth aspect, this application provides a processor, configured to perform the method according to the foregoing aspects.

Operations such as sending and obtaining/receiving performed by the processor may be understood as operations such as outputting and receiving or inputting performed by the processor unless otherwise specified or if the operations does not conflict with an actual function or internal logic of the operations in a related description, or may be understood as sending and receiving operations performed by a radio frequency circuit and an antenna. This is not limited in this application.

According to a sixth aspect, a computer-readable storage medium is provided. The computer-readable medium stores program code to be executed by a device, and the program code is used to perform the method in any possible implementation of the first aspect or the second aspect.

According to a seventh aspect, a computer program product including instructions is provided. When the computer program product runs on a computer, the computer is enabled to perform the method according to any possible implementation of the first aspect or the second aspect.

According to an eighth aspect, a communication system is provided and includes the foregoing terminal device and network device.

### BRIEF DESCRIPTION OF DRAWINGS

FIG. 1 is a schematic diagram of a wireless communication system 100 to which an embodiment of this application is applicable;
FIG. 2 is a schematic diagram of receiving a wake-up signal by a terminal device via a wake-up circuit;
FIG. 3 is a schematic diagram of a waveform obtained when OOK modulation is used for a wake-up signal;
FIG. 4 is a schematic diagram of a waveform of a signal after the signal passes through a channel;
FIG. 5 is a schematic diagram of sending a synchronization signal;
FIG. 6 is a schematic diagram of a signal transmission method 600 according to an embodiment of this application;
FIG. 7 is a schematic diagram of transmission of a synchronization signal to which an embodiment of this application is applicable;
FIG. 8 is a schematic diagram of transmission of a synchronization signal and an NR signal to which an embodiment of this application is applicable;
FIG. 9 is a schematic diagram to which Example 1 in Manner 1 is applicable;
FIG. 10 is a schematic diagram to which Example 2 in Manner 1 is applicable;
FIG. 11 is a schematic diagram to which Manner 2 is applicable;
FIG. 12 is a schematic diagram of periodically sending a first synchronization signal and a second synchronization signal;
FIG. 13 is another schematic diagram of periodically sending a first synchronization signal and a second synchronization signal;
FIG. 14 is a schematic diagram of a signal transmission method 1400 according to an embodiment of this application;
FIG. 15 is a schematic block diagram of a communication apparatus according to an embodiment of this application;
FIG. 16 is a schematic block diagram of another communication apparatus according to an embodiment of this application; and
FIG. 17 is a schematic block diagram of still another communication apparatus according to an embodiment of this application.

### DESCRIPTION OF EMBODIMENTS

The following describes technical solutions of this application with reference to accompanying drawings.

The technical solutions provided in this application may be applied to various communication systems, for example, a 5th generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be also applied to a future communication system, for example, a 6th generation mobile communication system. The technical solutions provided in this application may be also applied to device-to-device (device to device, D2D) communication, vehicle-to-everything (vehicle-to-everything, V2X) communication, machine-to-machine (machine to machine, M2M) communication, machine type communication (machine type communication, MTC), an internet of things (internet of things, IoT) communication system, or another communication system.

The terminal device in embodiments of this application may also be referred to as user equipment (User Equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice/data for a user, for example, a hand-held device or a vehicle-mounted device that has a wireless connection function. Currently, examples of some terminals are as follows: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in smart grid (smart grid), a wireless terminal in transportation safety (transportation safety), a wireless terminal in a smart city (smart city), a wireless terminal in smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, a wearable device, a terminal device in a 5G network, a terminal device in a future evolved public land mobile network (public land mobile network, PLMN), and the like. This is not limited in embodiments of this application.

By way of example, and not limitation, in embodiments of this application, the terminal device may alternatively be a wearable device. The wearable device may also be referred to as a wearable intelligent device, and is a general term for a wearable device that is intelligently designed and developed for daily wear by using a wearable technology, for example, glasses, gloves, a watch, clothing, and shoes. The wearable device is a portable device that can be directly worn on a body or integrated into clothes or an accessory of a user. The wearable device is not only a hardware device, but also implements a powerful function through software support, data exchange, and cloud interaction. In a broad sense, the wearable intelligent device includes a full-function, large-size, and complete or partial functions that can be implemented without depending on a smartphone, for example, a smartwatch or smart glasses, and focuses on only a type of application function and needs to be used with another device such as a smartphone, for example, various smart bands and smart jewelry that perform physical sign monitoring.

In embodiments of this application, an apparatus configured to implement a function of the terminal device may be a terminal device, or may be an apparatus, for example, a chip system or a chip, that can support the terminal device in implementing the function. The apparatus may be installed in the terminal device. In embodiments of this application, the chip system may include a chip, or may include a chip and another discrete device.

The network device in embodiments of this application may be a device configured to communicate with a terminal device. The network device may also be referred to as an access network device or a radio access network device. For example, the network device may be a base station. The network device in embodiments of this application may be a radio access network (radio access network, RAN) node (or device) that enables the terminal device to access a wireless network. The base station may cover various names in a broad sense, or may be replaced with the following names, for example, a NodeB (NodeB), an evolved NodeB (evolved NodeB, eNB), a next generation base station (next generation NodeB, gNB), a relay station, an access point, a transmitting and receiving point (transmitting and receiving point, TRP), a transmitting point (transmitting point, TP), a primary station, a secondary station, a multi-mode wireless (motor slide retainer, MSR) node, a home base station, a network controller, an access node, a radio node, an access point (AP), a transmission node, a transceiver node, a baseband unit (BBU), a remote radio unit (remote radio unit, RRU), an active antenna unit (active antenna unit, AAU), a remote radio head (remote radio head, RRH), a central unit (central unit, CU), a distributed unit (distributed unit, DU), a positioning node, and the like. The base station may be a macro base station, a micro base station, a relay node, a donor node, an analogue, or a combination thereof. The base station may alternatively be a communication module, a modem, or a chip that is disposed in the foregoing device or apparatus. The base station may alternatively be a mobile switching center, a device that bears a base station function in D2D, V2X, and M2M communication, a network side device in a 6G network, a device that bears a base station function in a future communication system, or the like. The base station may support networks of a same access technology or different access technologies. A specific technology and a specific device form that are used by the network device are not limited in embodiments of this application.

The base station may be fixed or mobile. For example, a helicopter or an uncrewed aerial vehicle may be configured as a mobile base station, and one or more cells may move based on a location of the mobile base station. In other examples, a helicopter or an uncrewed aerial vehicle may be configured as a device for communicating with another base station.

In some deployments, the network device mentioned in embodiments of this application may be a device including a CU, a DU, a device including a CU and a DU, or a device including a control plane CU node (central unit-control plane (central unit-control plane, CU-CP)), a user plane CU node (central unit-user plane (central unit-user plane, CU-UP)), and a DU node.

The network device and the terminal device may be deployed on the land, including an indoor device, an outdoor device, a handheld device, or a vehicle-mounted device; may be deployed on the water; or may be deployed on an airplane, a balloon, and a satellite in the air. Scenarios in which the network device and the terminal device are located are not limited in embodiments of this application.

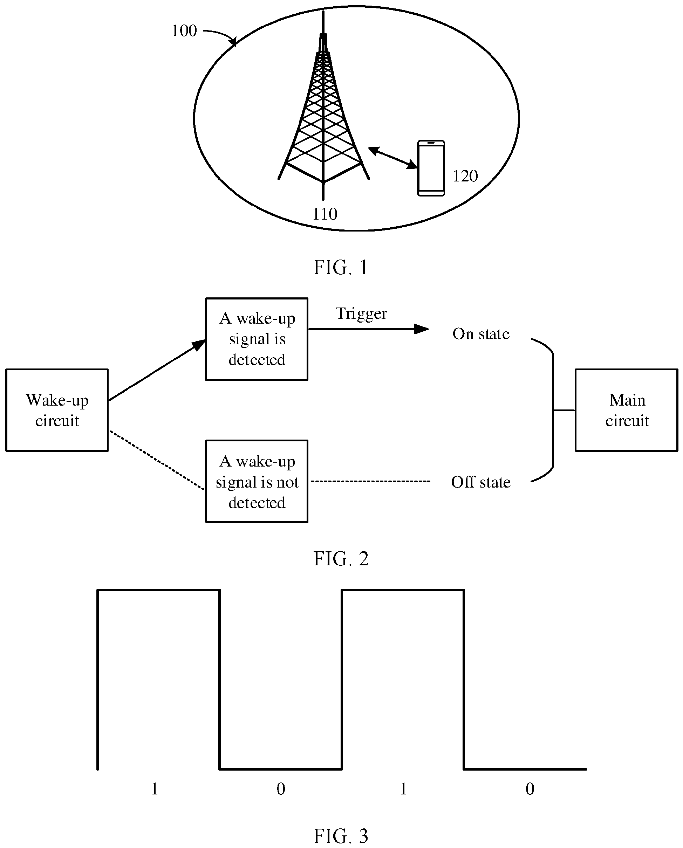

First, a network architecture to which this application is applicable is briefly described below with reference to FIG. 1.

For example, FIG. 1 is a schematic diagram of a wireless communication system 100 to which an embodiment of this application is applicable. As shown in FIG. 1, the wireless communication system 100 may include at least one network device, for example, a network device 110 shown in FIG. 1. The wireless communication system 100 may further include at least one terminal device, for example, a terminal device 120 shown in FIG. 1. A plurality of antennas may be configured for both the network device and the terminal device, and the network device and the terminal device may communicate with each other by using a multi-antenna technology.

When the network device communicates with the terminal device, the network device may manage one or more cells, and one cell may have an integer quantity of terminal devices. Optionally, the network device 110 and the terminal device 120 form a single-cell communication system. Without loss of generality, a cell is denoted as a cell #1. The network device 110 may be a network device in the cell #1, or the network device 110 may serve a terminal device (for example, the terminal device 120) in the cell #1.

It should be noted that, a cell may be understood as an area within coverage of a wireless signal of a network device.

It should be understood that FIG. 1 is only a simplified schematic diagram of an example for ease of understanding. The wireless communication system 100 may further include another network device or another terminal device, which is not shown in FIG. 1.

When the terminal device is in an idle (idle) state or an inactive (inactive) state, the terminal device may periodically receive paging (paging). For example, a procedure of receiving paging by the terminal device includes: when the terminal device is in the idle state or the inactive state, the terminal device obtains, based on an identifier (identifier, ID), namely, (UE ID) of the terminal device, a paging frame (paging frame, PF) and a location of a paging occasion (paging occasion, PO) in a PF through calculation of the terminal device, and receives paging (paging) in the PO. It should be understood that a procedure of receiving paging is only an example for description. For example, refer to a related standard. This is not limited in this application.

Generally, a same receiving module (or a receiver, or a receiver circuit) is used regardless of whether the terminal device performs a paging receiving procedure in the idle state or the inactive state or the terminal device receives data in a connected state. In this application, for ease of description, a module that completes these functions (or performs related steps) is referred to as a main circuit. It may be understood that the main circuit is only a name for differentiation, and a specific name of the main circuit does not limit the protection scope of this application. For example, without loss of generality, the main circuit may also be described as a second circuit. The main circuit is uniformly used in the following descriptions.

A signal received by the terminal device via the main circuit may be referred to as being transmitted on a link (denoted as a second link for differentiation). The second link represents a connection relationship between the terminal device and the network device, and is a logical concept rather than a physical entity. The second link may also be referred to as a main link. For ease of description, the second link is uniformly used in the following descriptions.

When the terminal device receives paging via the main circuit, power consumption is high. For example, when receiving paging, the terminal device first needs to receive a downlink signal via a receiving module of the main circuit, and then the terminal device further needs to perform blind detection on a physical downlink control channel (physical downlink control channel, PDCCH), and perform decoding on a received physical downlink shared channel (physical downlink shared channel, PDSCH), and the like. This causes high power consumption. In addition, because the main circuit is complex, reference power consumption (or static power consumption) is high when the main circuit operates.

To reduce power consumption caused by receiving paging by the terminal device, a possible method is as follows: The terminal device may receive a wake-up signal (wake-up signal/radio, WUS/WUR) via a separate low-power small circuit. The wake-up signal indicates paging-related information, and the paging-related information may include, for example, whether one terminal device or a group of terminal devices is paged. The low-power small circuit may be implemented via a separate simple-structure small circuit or chip, and has low power consumption.

It should be understood that the low-power small circuit may be, for example, referred to as a wake-up receiver (wake-up receiver, WUR), or may be referred to as a wake-up circuit, or may be referred to as a circuit with low power consumption. A name of the low-power small circuit is not limited in this application. In this application, for ease of description, the low-power small circuit is referred to as a wake-up circuit. It may be understood that the wake-up circuit is only named for differentiation, and a specific name of the wake-up circuit does not limit the protection scope of this application. For example, without loss of generality, the wake-up circuit may also be described as a first circuit. For ease of description, the wake-up circuit is uniformly used in the following descriptions.

Similarly, a signal received by the terminal device via the wake-up circuit may be referred to as being transmitted on a link (denoted as a first link for differentiation). The first link represents a connection relationship between the terminal device and the network device, and is a logical concept rather than a physical entity. It should be further understood that the wake-up signal is only an example name, and the name of the wake-up signal is not limited in this application.

It should be further understood that, in this application, the wake-up signal mainly indicates a paging-related signal, and all signals transmitted on the first link are not limited to the wake-up signal. As proposed in this application, a synchronization signal may also be transmitted through the first link. To be specific, the signal transmitted on the first link may include the synchronization signal and the wake-up signal. The synchronization signal may be used by the terminal device to perform time synchronization based on the synchronization signal, and the wake-up signal may indicate paging-related information.

For example, FIG. 2 is a schematic diagram of receiving a wake-up signal by a terminal device via a wake-up circuit.

As shown in FIG. 2, the wake-up signal is detected via the wake-up circuit, and the wake-up signal may carry paging-related indication information.

When the terminal device receives a signal via the wake-up circuit, if detecting no wake-up signal associated with the terminal device, the terminal device continues to receive a signal via the wake-up circuit, and the main circuit may be in an off state (or a sleep state); or if detecting the wake-up signal associated with the terminal device, the terminal device triggers to wake up the main circuit, that is, makes the main circuit be an on state/switches the main circuit to an on state (or referred to as an operating state, or referred to as an active state). After the main circuit is turned on, the terminal device may perform a process of receiving paging. For example, the terminal device receives a paging PDCCH, and receives the paging PDSCH after detecting the paging PDCCH in a PO corresponding to the terminal device.

It should be understood that FIG. 2 is mainly described by using an example in which the wake-up signal carries some paging-related information (for example, a part of a UE ID of a paged terminal device or a device group ID of a paged terminal device). This is not limited herein. For example, the wake-up signal may also carry all paging-related information (for example, a complete UE ID of a paged terminal device). In this case, after the main circuit is turned on, random access may be initiated. It may be understood that this is not limited. If the wake-up signal carries all paging-related information, the main circuit may also receive the paging-related information after the main circuit is turned on.

For example, to ensure power consumption benefit, on-off keying (on-off keying, OOK) modulation is used for the wake-up signal, and a corresponding wake-up circuit may receive the wake-up signal by using an envelope detection method. For example, FIG. 3 is a schematic diagram of a waveform obtained when OOK modulation is used for a wake-up signal.

When OOK modulation is used for the wake-up signal, each bit (that is, an encoded bit) may correspond to one symbol (symbol). Equivalently, a symbol may also be referred to as a chip (chip), or may be referred to as another name. This is not limited herein. When the bit is 1, a signal is transmitted in the symbol length (that is, a signal transmit power in the symbol length is not 0). When the bit is 0, no signal is sent in the symbol length (that is, a signal transmit power in the symbol length is 0). As shown in FIG. 3, the waveform shown in FIG. 3 may represent four bits: 1010.

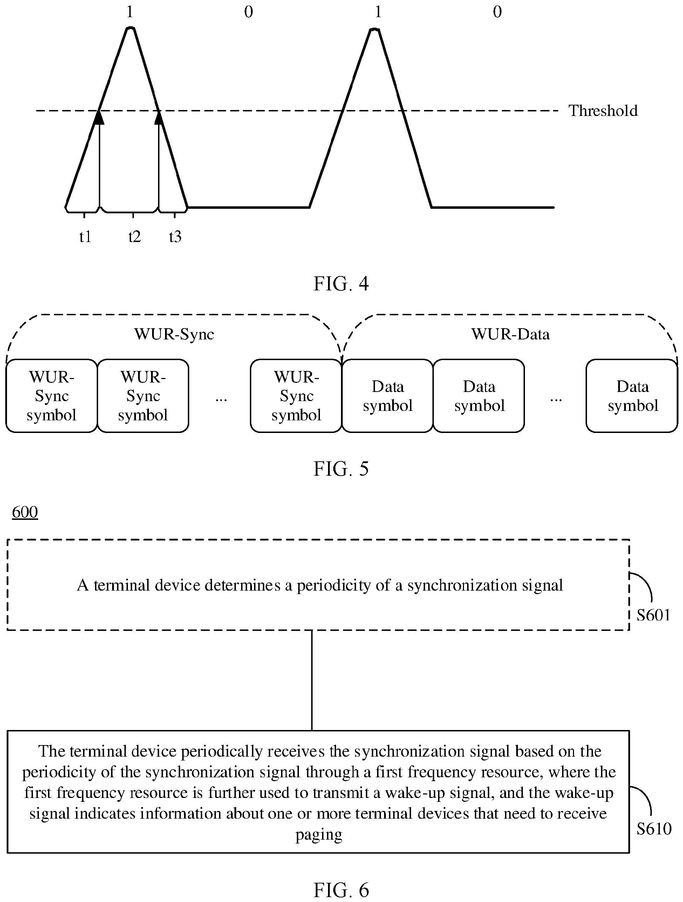

After a signal passes through a channel, distortion may occur due to impact of a channel status and the like. The waveform shown in FIG. 3 may change to a waveform shown in FIG. 4 at a receive end. For example, FIG. 4 is a schematic diagram of a waveform after the signal passes through the channel. To determine whether the signal corresponds to 0 or 1, the terminal device may compare a level value of a received signal with a threshold (the threshold is shown by a dashed line in FIG. 4). For example, if the level value of the signal received by the terminal device is greater than the threshold, it indicates that the signal corresponds to 1; or if the level value of the signal received by the terminal device is less than the threshold, it indicates that the signal corresponds to 0. As shown in FIG. 4, if a time location at which the terminal device compares the level value of the received signal with the threshold is within a range of t2, determining is accurate; or if a time location at which the terminal device compares the level value of the received signal with the threshold is within a range of tl or t3, determining is inaccurate, that is, 1 is incorrectly determined as 0.

Therefore, when the terminal device receives the wake-up signal via the wake-up circuit, to correctly receive the wake-up signal, time synchronization of a first link needs to be obtained. That is, the terminal device may obtain a boundary location of a symbol, and determine, based on the boundary location, whether a signal corresponds to a time location of 0 or 1. For example, the terminal device may determine, by using a level value at a middle location of the symbol, whether the signal corresponds to 0 or 1.

In addition, because precision of a local clock of the terminal device is limited, time drift may occur. If the first link does not provide a synchronization function, after the terminal device operates on the first link for a period of time, a problem of time asynchronization (that is, symbol boundary locations considered by the terminal device and the network device are inconsistent) between the terminal device and the network device may occur. This affects signal receiving.

In a possible manner, time synchronization may be performed by using a synchronization signal. For example, FIG. 5 is a schematic diagram of sending a synchronization signal. As shown in FIG. 5, a synchronization signal (that is, WUR-Sync in FIG. 5) and a data part (that is, WUR-Data in FIG. 5) (for example, paging-related information) may be sent together. In other words, the synchronization signal is closely followed by the data part. It may be understood that FIG. 5 is only an example for description, and a specific frame structure of the wake-up signal is not limited in this application.

The transmit end sends a wake-up signal, and then sends a channel-associated synchronization signal. In a manner of sending a synchronization signal together, a reference synchronization signal may be available for each data sending. This facilitates data receiving. However, for a cellular network, the cellular network has the following characteristics.
(1) A cellular network has a central control node. To correctly receive a signal sent by a network device, all terminals in a cell need to be synchronized with the network device. Therefore, compared with sending a synchronization signal together each time when a data signal is sent, the cellular network is more suitable for the network device to broadcast a separate synchronization signal, so that a plurality of terminal devices in the cell can obtain time synchronization when no data is transmitted.
(2) In a cellular network, a network device (for example, a base station) may control and schedule an air interface resource in a cell. Therefore, a location at which a synchronization signal is sent can be better controlled, and a conflict between the synchronization signal and another signal can be avoided.
(3) In a cellular network, to improve spectral efficiency, resource overheads for a synchronization signal need to be reduced as much as possible. A synchronization signal sent together is not specific, that is, the synchronization signal is sent only when data is transmitted. In this way, to ensure time synchronization precision, the synchronization signal sent together is usually redundant in design. As a result, a length of the synchronization signal sent in the channel-associated manner is long, and resource overheads for the synchronization signal are increased.

Due to the foregoing reasons, a manner of sending the synchronization signal in the channel-associated manner is not applicable to the cellular network.

This application provides a solution. The network device periodically sends the synchronization signal, so that time synchronization of the first link can be obtained, and all terminal devices can share a same synchronization signal. This can reduce resource overheads for the synchronization signal. In addition, the network device periodically sends the synchronization signal. In other words, the synchronization signal does not need to be sent together. In this way, after switching from the second link to the first link, the terminal device can quickly obtain time synchronization by using the periodically sent synchronization signal.

It may be understood that in this specification, "receiving a signal through the first link/circuit" and "operating on the first link", "in a first state (state), or in a wake-up state, or in a WUR state", and "using a first mode (mode), using a wake-up mode, or using a WUR mode" may be alternatively used. When a difference between the two methods is not emphasized, meanings to be expressed are consistent. "Receiving a signal through the second link/circuit" and "operating on the second link", "in the second state", and "using the second mode" may be alternatively used. When a difference between the two methods is not emphasized, meanings to be expressed are consistent.

It may be further understood that in this specification, "initiating random access by the terminal device" may include "sending a random access preamble sequence by the terminal device", that is, "initiating random access by the terminal device" in the following may be replaced with "sending a random access preamble sequence by the terminal device". It may be understood that any manner in which the terminal device can initiate random access is applicable to this application.

It may be understood that the term "and/or" in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

Embodiments provided in this application are described below in detail with reference to the accompanying drawings. The embodiments provided in this application may be applied to the wireless communication system shown in FIG. 1. This is not limited.

FIG. 6 is a schematic diagram of a signal transmission method 600 according to an embodiment of this application. The method 600 may include the following steps.

S610: A terminal device periodically receives, based on a periodicity of a synchronization signal, the synchronization signal through a first frequency resource, where the first frequency resource is further used to transmit a wake-up signal, and the wake-up signal indicates information about one or more terminal devices that need to receive paging.

Correspondingly, a network device periodically sends the synchronization signal. For example, the network device determines the periodicity of the synchronization signal, and periodically sends the synchronization signal based on the periodicity of the synchronization signal.

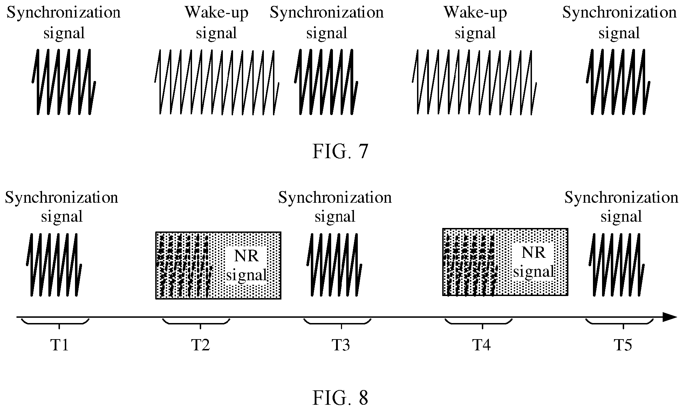

In this application, the synchronization signal may be periodically transmitted, that is, the synchronization signal may not need to be sent together. In other words, the synchronization signal does not need to be followed by the wake-up signal. For example, FIG. 7 is a schematic diagram of transmission of a synchronization signal to which this embodiment of this application is applicable. As shown in FIG. 7, the network device periodically sends the synchronization signal, and the synchronization signal and the wake-up signal may be separately sent, that is, the synchronization signal does not need to be sent together.

Optionally, before the step S610, the method 600 further includes step 601.

S601: The terminal device determines the periodicity of the synchronization signal.

The periodicity of the synchronization signal, or referred to as a sending periodicity of the synchronization signal, indicates a periodicity of sending the synchronization signal.

According to this application, the network device sends the synchronization signal to the terminal device, and the terminal device may perform time synchronization by using the received synchronization signal, so that the terminal device can correctly receive the wake-up signal. In addition, in this application, the network device periodically sends the synchronization signal, and the terminal device periodically receives the synchronization signal. This can reduce resource overheads for the synchronization signal. Specifically, in a cellular network, a network device is used as a central control node. Therefore, each terminal device may perform time synchronization with a same network device. The network device periodically sends the synchronization signal, so that all terminal devices in the network can share a same synchronization signal. This can reduce resource overheads for the synchronization signal. In addition, compared with a manner in which a synchronization signal is sent together, that is, a manner in which data information is definitely transmitted after the synchronization signal, in this application, the network device periodically sends the synchronization signal on a wake-up link. In other words, the synchronization signal does not need to be sent together, but is separately and periodically sent. In other words, in this application, there may not necessarily be data information followed by the synchronization signal. Therefore, the network device does not need to send the synchronization signal when sending the data information, and may send the synchronization signal based on the periodicity of the synchronization signal, so that the terminal device can complete time synchronization before receiving the wake-up signal. In addition, if the synchronization signal is sent together, whether the terminal device can receive the synchronization signal depends on whether the network device currently sends data, and a delay in obtaining synchronization by the terminal device after the terminal device switches from a main link to the wake-up link cannot be ensured. According to this application, after switching from the main link to the wake-up link, the terminal device may quickly obtain time synchronization by using the periodically sent synchronization signal.

The synchronization signal indicates a signal that can be used by the terminal device to perform synchronization. In other words, the terminal device may perform time synchronization based on the synchronization signal.

In a possible manner, the synchronization signal may be generated based on a sequence having an autocorrelation characteristic (for example, a sequence having a good autocorrelation characteristic). This can improve synchronization accuracy. For example, the synchronization signal may be generated based on any one of the following sequences: an M sequence (that is, a maximum length sequence (Maximum length sequence)), a pseudo-random (Pseudo-Noise, PN) sequence, a GOLD sequence, and the like.

It should be understood that the synchronization signals listed above are only examples, and should not constitute any limitation on this application. This application does not exclude a possibility of defining another signal in a future protocol to implement a same or similar function.

Optionally, a modulation scheme of the synchronization signal is amplitude shift keying (amplitude shift keying, ASK), for example, may be on-off keying (on-off keying, OOK). The OOK modulation scheme can ensure power consumption benefit as much as possible.

Optionally, a waveform of the synchronization signal is OOK.

The wake-up signal may indicate paging-related information. The paging-related information may be, for example, used by the terminal device to determine whether to perform a procedure of receiving paging, or may be used by the terminal device to determine whether to initiate random access. For brevity, "paging-related information" is referred to as paging information for short below.

For example, the paging information includes information (such as a UE ID) about one or more terminal devices that need to receive paging. In other words, the wake-up signal may indicate the information (such as the UE ID) about the one or more terminal devices that need to receive the paging. The one or more terminal devices may also be in a form of a terminal device group (UE group). A manner of grouping terminal device groups is not limited. For example, the terminal device groups may be grouped by area, or the terminal device groups may be grouped by whether the wake-up signal is shared, or the terminal device groups may be grouped by a feature of information (for example, a feature of a UE ID) of terminal devices. In addition, if the paging information includes information about a terminal device that needs to receive paging (or information about a terminal device group), the paging information may also be referred to as paging information of the terminal device (or paging information of the terminal device group, or paging information of the paging group).

It may be understood that the foregoing content included in the paging information is an example for description, and this application is not limited thereto.

Optionally, a modulation scheme of the wake-up signal is ASK, for example, may be OOK. The OOK modulation scheme can ensure power consumption benefit as much as possible.

Optionally, a waveform of the wake-up signal is OOK

The first frequency resource may indicate a frequency resource used by the terminal device to receive the wake-up signal and the synchronization signal, that is, a frequency resource used by the network device to send the wake-up signal and the synchronization signal.

Frequency resources used for transmitting the wake-up signal and the synchronization signal may be the same, for example, both are the first frequency resource. Optionally, the waveform of the synchronization signal is the same as the waveform of the wake-up signal, for example, both are OOK. Optionally, the modulation scheme of the synchronization signal is the same as the modulation scheme of the wake-up signal, for example, both are OOK.

In a first possible case, the terminal device includes a first module and a second module. For example, power consumption of the first module may be less than power consumption of the second module. The first module may be, for example, the wake-up circuit in FIG. 2, or may be a receiving module of the wake-up circuit. The second module may be, for example, the main circuit in FIG. 2, or may be a receiving module of the main circuit. In this application, the first module may be replaced with a wake-up circuit (or a first circuit), and the second module may be replaced with a main circuit (or a second circuit). The following uniformly uses the first module and the second module for description.

In this case, the terminal device may receive the synchronization signal and the wake-up signal via (or using) the first module, receive and/or send another signal via (or using) the second module, initiate random access via the second module, or the like.

For example, the terminal device may receive a first signal via the second module, where the first signal is a signal different from the wake-up signal and the synchronization signal. The first signal may indicate, for example, various downlink signals or channels in a legacy NR signal. For example, the first signal includes any one or more of the following: a synchronization signal block (synchronization signal block, SSB), a PDCCH, a PDSCH, a channel state information-reference signal (channel state information-reference signal, CSI-RS), a phase tracking reference signal (phase tracking reference signal, PTRS), a positioning reference signal (positioning reference signal, PRS), and a demodulation reference signal (Demodulation reference signal, DMRS).

For another example, the terminal device may send a second signal via the second module, and the second signal may indicate, for example, various uplink signals or channels in the legacy NR signal. For example, the second signal includes any one or more of the following: a DMRS, a physical uplink control channel (physical uplink control channel, PUCCH), a physical uplink shared channel (physical uplink shared channel, PUSCH), and a sounding reference signal (sounding reference signal, SRS).

For another example, the terminal device may receive first information via the second module. For example, if the terminal device receives the wake-up signal via the first module, and the wake-up signal includes paging information related to the terminal device, the terminal device receives the first information via the second module. The first information may include one or more of the following: a paging early indication (paging early indication, PEI), paging DCI (paging DCI), and a paging message (paging message). The PEI may indicate whether paging is sent on a PO associated with the PEI.

For another example, the terminal device initiates random access via the second module, for example, sends a random access preamble (preamble) sequence.

It may be understood that "the terminal device periodically receives the synchronization signal through the first frequency resource" may be replaced with "the terminal device periodically receives the synchronization signal via the first module".

In a second possible case, the terminal device may operate on a first link (or the terminal device may receive and send a signal on a first link), or may operate on a second link (or the terminal device may receive and send a signal on a second link). In other words, the terminal device may communicate with the network device through the first link, or may communicate with the network device through the second link. For example, as described above, the first link may indicate a link used when the terminal device receives and sends a signal via the wake-up circuit in FIG. 2, and the second link may indicate a link used when the terminal device receives and sends a signal via the main circuit in FIG. 2.

In this case, the terminal device receives the synchronization signal and the wake-up signal on the first link, receives and/or sends another signal on the second link, initiates random access on the second link, or the like.

For example, if the terminal device communicates with the network device through the first link, the terminal device receives and sends a signal (for example, receives the synchronization signal and the wake-up signal) via the first module; or if the terminal device communicates with the network device through the second link, the terminal device receives and sends a signal (for example, receives a first signal and/or sends a second signal) via the second module.

For another example, if the terminal device communicates with the network device through the first link, the terminal device receives the synchronization signal and the wake-up signal; or if the terminal device communicates with the network device through the second link, the terminal device receives the first signal and/or sends the second signal. For the first signal and the second signal, refer to the foregoing descriptions. Details are not described again.

For another example, if the terminal device communicates with the network device through the second link, the terminal device receives first information. For the first information, refer to the foregoing description. Details are not described again.

For another example, if the terminal device communicates with the network device through the second link, the terminal device initiates random access, for example, the terminal device sends a random access preamble sequence.

It may be understood that "the terminal device periodically receives the synchronization signal through the first frequency resource" may be replaced with "the terminal device periodically receives the synchronization signal on the first link", or may be replaced with "the terminal device periodically receives the synchronization signal via the wake-up circuit".

In a third possible case, the terminal device may be in a first state (for example, in a WUR state) and a second state. The first state and the second state are used to describe different states (for example, different radio resource control (radio resource control, RRC) states) of the terminal device. For example, power consumption of the terminal device in the first state may be less than power consumption of the terminal device in the second state. The first state may be, for example, an idle state or an inactive state, or may be the WUR state. The second state may be, for example, a connected (connected) state. The first state (for example, the WUR state) may correspond to a case in which the terminal device operates on a first link, or correspond to a case in which the terminal device receives and sends a signal (for example, receives the synchronization signal and the wake-up signal) via a first module.

In this case, the terminal device receives the synchronization signal and the wake-up signal when the terminal device is in the first state, receives and/or sends another signal when the terminal device is in the second state, initiates random access when the terminal device is in the second state, or the like.

For example, if the terminal device is in the first state, the terminal device receives and sends a signal (for example, receives the synchronization signal and the wake-up signal) via the first module or operates on the first link; or if the terminal device is in the second state, the terminal device receives and sends a signal (for example, receives a first signal and/or sends a second signal) via the second module or operates on a second link.

For another example, if the terminal device is in the first state, the terminal device receives the synchronization signal and the wake-up signal; or if the terminal device is in the second state, the terminal device receives the first signal and/or sends the second signal. For the first signal and the second signal, refer to the foregoing descriptions. Details are not described again.

For another example, if the terminal device is in the second state, the terminal device receives first information. For the first information, refer to the foregoing description. Details are not described again.

For another example, if the terminal device is in the second state, the terminal device initiates random access, for example, the terminal device sends a random access preamble sequence.

It may be understood that "the terminal device periodically receives the synchronization signal through the first frequency resource" may be replaced with "the terminal device periodically receives the synchronization signal when the terminal device is in the first state (for example, in the WUR state)".

In a fourth possible case, the terminal device may use a first mode (for example, a WUR mode) and a second mode. The first mode and the second mode are used to describe different modes that are used by the terminal device to transmit signals. For example, power consumption corresponding to a case in which the terminal device transmits a signal in the first mode may be less than power consumption corresponding to a case in which the terminal device transmits a signal in the second mode. The first mode (for example, the WUR mode) may correspond to a case in which the terminal device operates on the first link, or correspond to a case in which the terminal device receives and sends a signal (for example, receives the synchronization signal and the wake-up signal) via a first module.

In this case, the terminal device receives the synchronization signal and the wake-up signal in the first mode, receives and/or sends another signal in the second mode, initiates random access in the second mode, or the like.

For example, if the terminal device uses the first mode, the terminal device receives and sends a signal (for example, receives the synchronization signal and the wake-up signal) via the first module or operates on the first link; or if the terminal device uses the second mode, the terminal device receives and sends a signal (for example, receives a first signal and/or sends a second signal) via the second module or operates on the second link.

For another example, if the terminal device uses the first mode, the terminal device receives the synchronization signal and the wake-up signal; or if the terminal device uses the second mode, the terminal device receives the first signal and/or sends the second signal. For the first signal and the second signal, refer to the foregoing descriptions. Details are not described again.

For another example, if the terminal device uses the second mode, the terminal device receives first information. For the first information, refer to the foregoing description. Details are not described again.

For another example, if the terminal device uses the second mode, the terminal device initiates random access, for example, the terminal device sends a random access preamble sequence.

It may be understood that "the terminal device periodically receives the synchronization signal through the first frequency resource" may be replaced with "the terminal device periodically receives the synchronization signal in the first mode".

It may be understood that the foregoing several cases are only described from different perspectives, and do not limit the protection scope of embodiments of this application. In addition, any variation of the foregoing several cases is applicable to embodiments of this application. For example, distinguishing may alternatively be made by using a modulation scheme or a waveform.

In a possible design, the modulation schemes of the synchronization signal and the wake-up signal are OOK, and a modulation scheme of the first signal is orthogonal frequency division multiplexing (orthogonal frequency division multiplexing, OFDM) modulation or discrete Fourier transform-spread-orthogonal frequency division multiplexing (discrete Fourier transform-spread-orthogonal frequency division multiplexing, DFT-s-OFDM) modulation.

In another possible design, the modulation schemes of the synchronization signal and the wake-up signal are OOK, and a modulation scheme of the second signal is OFDM modulation or DFT-s-OFDM modulation.

In still another possible design, the waveforms of the synchronization signal and the wake-up signal are OOK, and a waveform of the first signal is an OFDM waveform or a DFT-s-OFDM waveform.

In yet another possible design, the waveforms of the synchronization signal and the wake-up signal are OOK, and a waveform of the second signal is an OFDM waveform or a DFT-s-OFDM waveform.

The foregoing mainly describes the synchronization signal and the wake-up signal. The following describes this application from several aspects. Content in the following aspects may be used separately or in combination.

### Aspect 1: Periodicity of a synchronization signal

In the following, for ease of description, a periodicity T is used to indicate the periodicity of the synchronization signal.

For example, a unit of the periodicity T may be any one of the following: a symbol (symbol), a slot (slot), a mini-slot (mini-slot), a subframe (subframe), a frame (frame), a second (s), a millisecond (ms), and the like.

For example, a value of the periodicity T may be any one of the following: one or more symbols, one or more slots, one or more mini-slots, one or more subframes, one or more frames, ml seconds, m2 milliseconds, and the like. m1 and m2 are numbers greater than 0.

It may be understood that the foregoing is only an example for description, and the unit and the value of the periodicity T are not limited in this application.

Optionally, the periodicity T is associated with a transmission parameter of the wake-up signal (or referred to as a correlation, or referred to as a correspondence).

The transmission parameter of the wake-up signal indicates a parameter used for transmitting the wake-up signal.

For example, the transmission parameter of the wake-up signal includes a time domain resource length or a subcarrier spacing (subcarrier spacing, SCS).

The time domain resource length indicates a length of a time domain resource used for transmitting the wake-up signal. It is assumed that a symbol (symbol) or a chip (chip) is a minimum granularity of a signal structure, and a corresponding time domain resource used for transmitting each (after encoding) bit may be a symbol (symbol) or a chip (chip). "A time domain resource length of the wake-up signal" may be replaced with "a symbol length", or may be replaced with "a chip length". This is not limited.

For example, the time domain resource length of the wake-up signal may include, for example, one or more time domain symbols, may include one or more mini-slots, may include one or more slots, or may include one or more subframes. It may be understood that the time domain resources listed above are only intended to facilitate understanding of the solutions of this application, and should not be construed as a limitation on this application.

In a possible manner, the periodicity T is associated with the time domain resource length (for example, a symbol length) of the wake-up signal.

That the periodicity T is associated with the time domain resource length indicates that a length of the periodicity T is associated with the time domain resource length, or a size of the periodicity T is associated with the time domain resource length. For ease of description, the following provides a unified description: The periodicity T is associated with the time domain resource length.

For example, the time domain resource length includes a first time domain resource length and a second time domain resource length, a first periodicity of the synchronization signal is associated with the first time domain resource length, a second periodicity of the synchronization signal is associated with the second time domain resource length, the first time domain resource length is less than the second time domain resource length, and the first periodicity is less than the second periodicity. In other words, a longer time domain resource length of the wake-up signal may indicate a longer periodicity T. After completing synchronization by using a synchronization signal, the terminal device does not perform synchronization before receiving a next synchronization signal. Because local clock precision of a receiver for the first link in the terminal device is limited, time offset between the terminal device and a network side becomes increasingly large between two synchronization signals. If the wake-up signal is modulated in an OOK modulation scheme, demodulation performance of an OOK signal is affected by the time domain resource length (for example, a symbol length). A longer time domain resource length indicates higher tolerance of residual time offset. Therefore, when a time offset change rate is fixed, a longer time domain resource length indicates longer time in which "reception performance can be ensured without performing time synchronization again", and a corresponding periodicity of the synchronization signal may be set to a larger value.

In another possible manner, the periodicity T is associated with an SCS of the wake-up signal.

For example, the subcarrier spacing includes a first subcarrier spacing and a second subcarrier spacing, a first periodicity of the synchronization signal is associated with the first subcarrier spacing, a second periodicity of the synchronization signal is associated with the second subcarrier spacing, the first subcarrier spacing is greater than the second subcarrier spacing, and the first periodicity is less than the second periodicity. In other words, a smaller SCS of the wake-up signal may indicate a longer periodicity T. Similarly, because a smaller SCS indicates larger tolerance of residual time offset, a corresponding periodicity of the synchronization signal may be set to a larger value.

The time domain resource length and the SCS are mainly used as an example for description in the foregoing. This application is not limited thereto. For example, the periodicity T may be further associated with another transmission parameter of the wake-up signal. For another example, the periodicity T may be associated with a transmission parameter of the first link. If the periodicity T is associated with the transmission parameter of the first link, transmission parameters of the wake-up signal and the synchronization signal may be the same, that is, the transmission parameters of the wake-up signal and the synchronization signal are the transmission parameter of the first link.

Optionally, the periodicity T is configured by the network device, or is predefined (for example, predefined in a standard). The following separately provides descriptions.

In a possible manner, the periodicity T may be configured by the network device.

In this manner, the network device may flexibly select a proper periodicity T. This can control resource overheads for the synchronization signal.

If the periodicity T is configured by the network device, before the step S601, the method 600 may further include: The network device sends first configuration information, where the first configuration information is used to configure the periodicity of the synchronization signal. Correspondingly, the terminal device receives the first configuration information, and further, in the step S601, the terminal device may learn of the periodicity T based on the first configuration information.

For example, the network device sends configuration information of the first link (that is, an example of the first configuration information), and the configuration information may include the periodicity T. For example, the network device may send the configuration information of the first link on a second link (for example, an NR system) by using radio resource control RRC signaling (for example, dedicated RRC (dedicated RRC) signaling) or by using a system information block (system information block, SIB). The configuration information may include the periodicity T.

In another possible manner, the periodicity T may be predefined (for example, predefined in a standard).

In this manner, the network device or the terminal device may determine the periodicity T based on the predefined (for example, predefined in the standard). This reduces signaling overheads caused by notifying the periodicity T by the network device.

For example, the periodicity T may be related to a transmission parameter of the wake-up signal. If the transmission parameter of the wake-up signal is determined, the corresponding periodicity T is also determined. A manner in which the terminal device learns of the transmission parameter of the wake-up signal is not limited. For example, the terminal device receives system information from the network device, where the system information includes the transmission parameter of the wake-up signal; and the terminal device may learn of a corresponding periodicity T based on the transmission parameter of the wake-up signal. It may be understood that, the first possible case is used as an example, and the transmission parameter of the wake-up signal may be received by the terminal device via the second module. The second possible case is used as an example, and the transmission parameter of the wake-up signal may be received by the terminal device on the second link. The third possible case is used as an example, and the transmission parameter of the wake-up signal may be received by the terminal device in the second state. The fourth possible case is used as an example, and the transmission parameter of the wake-up signal may be received by the terminal device in the second mode.

For example, the periodicity T is associated with the time domain resource length (for example, a symbol length) of the wake-up signal. The periodicity T and the time domain resource length (for example, the symbol length) may exist in a form of Table 1.

**Table 1**

| Time domain resource length | Periodicity T |
|---|---|
| Length# 1 | T#1 |
| Length#2 | T#2 |
| Length#3 | T#3 |

Table 1 is used as an example. For example, if the time domain resource length of the wake-up signal is length#1, it may be learned that the periodicity T of the synchronization signal used for the first link is T#1; if the time domain resource length of the wake-up signal is length#2, it may be learned that the periodicity T of the synchronization signal used for the first link is T#2; and if the time domain resource length of the wake-up signal is length#3, it may be learned that the periodicity T of the synchronization signal used for the first link is T#3.

It should be understood that Table 1 is only an example for description, and is not limited thereto. Any variation of Table 1 is applicable to this application. For example, the time domain resource length may further include more lengths. For another example, the time domain resource length may be a specific value, or may be a value range (for example, greater than a value, or less than a value, or between a value and another value). For example, length#1 may be a value, or length#1 may be a value range.

For another example, the periodicity T is associated with the SCS of the wake-up signal. The periodicity T and the SCS may exist in a form of Table 2.

**Table 2**

| SCS | Periodicity T |
|---|---|
| SCS#1 | T#1 |
| SCS#2 | T#2 |
| SCS#3 | T#3 |

Table 2 is used as an example. For example, if the SCS of the wake-up signal is SCS#1, it may be learned that the periodicity T of the synchronization signal used for the first link is T#1; if the SCS of the wake-up signal is SCS#2, it may be learned that the periodicity T of the synchronization signal used for the first link is T#2; or if the SCS of the wake-up signal is SCS#3, it may be learned that the periodicity T of the synchronization signal used for the first link is T#3.

It should be understood that Table 2 is only an example for description, and is not limited thereto. Any variation of Table 2 is applicable to this application. For example, the SCS may further include more SCSs.

### Aspect 2: Pattern (pattern) (or referred to as a pattern, or referred to as a pattern) of a synchronization signal

Optionally, the network device sends, based on a periodicity T and the pattern of the synchronization signal, the synchronization signal through a first frequency resource. Correspondingly, the terminal device may receive, based on the periodicity T and the pattern of the synchronization signal, the synchronization signal through the first frequency resource.

Further, optionally, the network device sends second configuration information, where the second configuration information is used to configure the pattern of the synchronization signal. Correspondingly, the terminal device receives the second configuration information. The terminal device may determine the pattern of the synchronization signal based on the second configuration information, and may receive the synchronization signal based on the periodicity T and the pattern of the synchronization signal.

This manner can improve flexibility of the periodicity T. For example, if the periodicity T is predefined in a standard, once a transmission parameter (for example, a symbol length or a subcarrier spacing) is determined, the periodicity T is determined accordingly. This may cause a limitation on network deployment of a first link. By configuring the pattern of the synchronization signal, the network device can flexibly configure an actual sending periodicity of the synchronization signal. This can improve flexibility.

The following describes two possible cases.

In a first possible case, the pattern of the synchronization signal may indicate (or be referred to represent, or be referred to denote): a time domain location at which the synchronization signal can be sent (or can be received), and/or a time domain location at which the synchronization signal cannot be sent (or cannot be received). The network device may send the synchronization signal based on the periodicity T and the time domain location that is indicated by the pattern of the synchronization signal and at which the synchronization signal can be sent. The terminal device may receive the synchronization signal based on the periodicity T and the time domain location that is indicated by the pattern of the synchronization signal and at which the synchronization signal can be received. It may be understood that, in this case, because the pattern of the synchronization signal needs to be further considered during transmission of the synchronization signal, the synchronization signal may not be periodically transmitted.

For example, it is assumed that a synchronization signal is sent or received at a time domain location based on a periodicity T. If the pattern of the synchronization signal indicates that the synchronization signal cannot be sent or received at the time domain location, the synchronization signal is not sent or received at the time domain location; or if the pattern of the synchronization signal indicates that the synchronization signal can be sent or received at the time domain location, the synchronization signal is sent or received at the time domain location.

In a second possible case, the pattern of the synchronization signal may indicate (or be referred to represent, or be referred to denote): a time domain location at which a signal can be transmitted through a first link, and/or a time domain location at which a signal cannot be transmitted through the first link. For example, when the pattern of the synchronization signal indicates a signal can be transmitted (a signal is received and/or a signal is sent) through the first link at a time domain location, the terminal device may determine, based on the periodicity T of the synchronization signal, whether to receive the wake-up signal or the synchronization signal at the time domain location.

For example, it is assumed that the pattern of the synchronization signal indicates a signal can be transmitted (a signal is received and/or a signal is sent) through the first link at a time domain location. If the terminal device determines, based on the periodicity T, to receive the synchronization signal at the time domain location, the terminal device receives the synchronization signal at the time domain location.

For another example, it is assumed that the pattern of the synchronization signal indicates a signal cannot be transmitted (a signal is received and/or a signal is sent) through the first link at a time domain location. If the terminal device determines, based on the periodicity T, not to receive the synchronization signal at the time domain location, the terminal device may receive the wake-up signal at the time domain location.

For another example, it is assumed that the pattern of the synchronization signal indicates a signal can be transmitted (a signal is received and/or a signal is sent) on the first link at a time domain location. In this case, a signal is not transmitted through the first link at the time domain location, and the terminal device may receive the first signal and/or send the second signal at the time domain location. For the first signal and the second signal, refer to the foregoing descriptions. Details are not described herein again.

It may be understood that specific content indicated by using the pattern of the synchronization signal is not limited in this application. For example, the terminal device may determine, based on the pattern of the synchronization signal, whether to receive the synchronization signal, or may determine, based on the pattern of the synchronization signal, whether to receive and send a signal (for example, receive the synchronization signal and the wake-up signal) on the first link, or may determine, based on the pattern of the synchronization signal, whether to receive the synchronization signal or the wake-up signal. The first possible case is mainly used as an example for description below.

Optionally, the network device sends the first signal and/or receives the second signal at a first time domain location through the first frequency resource, where a time domain location at which the synchronization signal is sent and that is represented by the pattern of the synchronization signal does not include the first time domain location, or a time domain location that is indicated by the pattern of the synchronization signal and that cannot be used to send the synchronization signal includes the first time domain location. Correspondingly, the terminal device may receive the first signal and/or send the second signal at the first time domain location through the first frequency resource.

In this manner, a resource occupation ratio for the first link can be reduced, and signals (for example, the wake-up signal and the synchronization signal) on the first link and another signal (for example, the first signal and/or the second signal) can be transmitted in a time-division multiplexing (time-division multiplexing, TDM) mode. That is, at a same frequency location, the signal on the first link is sent in a period of time, and the another signal (for example, the first signal) is sent in another period of time. Therefore, this application also helps align a symbol boundary of a signal on the first link with a symbol boundary of an existing signal (for example, the first signal or the second signal), and can reduce an interference level.

The first signal is a signal different from the wake-up signal and the synchronization signal. In other words, the network device may send, at the first time domain location, a downlink signal other than the wake-up signal and the synchronization signal. The first signal may indicate, for example, various downlink signals or channels in a legacy NR signal. For example, the first signal includes one or more of the following: an SSB, a PDCCH, a PDSCH, a CSI-RS, a PTRS, a PRS, and a DMRS.

The second signal is a signal different from the wake-up signal and the synchronization signal. In other words, the network device may receive an uplink signal at the first time domain location. The second signal may indicate, for example, various uplink signals or channels in the legacy NR signal. For example, the second signal includes one or more of the following: a DMRS, a PUCCH, a PUSCH, and an SRS.

For the first signal and the second signal, refer to the foregoing descriptions. Details are not described herein again.

An NR signal (the NR signal may be the first signal, or may be the second signal) is used as an example. FIG. 8 is a schematic diagram of transmission of a synchronization signal and an NR signal to which this embodiment of this application is applicable.

As shown in FIG. 8, if a predefined periodicity T is used, the network device sends the synchronization signals at T1, T2, T3, T4, and T5. During actual communication, the periodicity of the synchronization signal is doubled. Specifically, periodicities T1 to T4 are used as an example. The network device allocates resources corresponding to T2 and T4 to NR signals for use. To be specific, the network device sends synchronization signals at T1 and T3, and sends first signals at T2 and T4; or the network device sends synchronization signals at T1 and T3, and receives second signals at T2 and T4.

### Aspect 3: Data rate

In this application, the first link may support a plurality of data rates. Data rate indicates data rate (data rate).

This can improve system robustness, and improve system capacity. For example, when a channel status between the terminal device and the network device is poor (for example, a signal-noise ratio (signal-noise ratio, SNR) is low), a data rate of the wake-up signal may be reduced. Reducing the data rate of the wake-up signal may be equivalent to increasing a length of the wake-up signal, so that more time-domain diversity can be obtained, and robustness of the signal on the first link is improved. In addition, it is considered that arrival time of paging information of each terminal device is random, and a quantity of pieces of paging information that needs to be sent on the first link is not specific in a period of time. Therefore, to enable the terminal device at a cell edge to correctly receive the wake-up signal as much as possible, the wake-up signal may use a low data rate. When a large quantity of pieces of paging information need to be sent, it is considered that a wake-up signal with a low data rate occupies a large quantity of air interface resources (time-frequency resources), using a low data rate may cause insufficient system capacity. Therefore, it may be considered that a wake-up signal is sent in a high data rate manner, to improve a system capacity in a short time.

Optionally, the terminal device may learn of the data rate of the wake-up signal by using the synchronization signal, or learn of the data rate of the wake-up signal by using the wake-up signal. Further, the terminal device may receive and demodulate the wake-up signal based on the data rate of the wake-up signal. The following describes the two manners in detail.

Manner 1: The data rate of the wake-up signal is learned of by using the synchronization signal.

Optionally, the network device sends, based on the periodicity of the synchronization signal, the synchronization signal at a first moment through the first frequency resource, where the synchronization signal indicates a data rate of the wake-up signal in a first time period, and the first time period is after the first moment.

The first moment indicates time at which the synchronization signal is sent, and may be a moment (for example, a start moment at which the synchronization signal is sent, or an end moment at which the synchronization signal is sent), or may be a time period (for example, a time period between a start moment and an end moment at which the synchronization signal is sent). This is not limited.

The first time period may be a time period after the first moment, that is, a time period after the network device sends the synchronization signal, or a time period after the terminal device receives the synchronization signal.

For example, the first time period is after the first moment and before a second moment, the second moment is a moment at which the network device sends an i^{th} synchronization signal after the first moment, and i is an integer greater than or equal to 1. That is, it is assumed that the network device sends the first synchronization signal at the first moment, and sends the (i+1)^{th} synchronization signal at the second moment, where the first time period is a time period between the first moment and the second moment. For example, if i=1, the first time period may indicate a time period from the time at which the network device currently sends the synchronization signal to the time at which the network device sends the synchronization signal next time, or it may be understood that start time of the first time period is the first moment, and duration is the periodicity T.

It should be understood that the foregoing is an example for description, and duration of the first time period is not limited. For example, the duration of the first time period may also be preset duration, for example, duration preconfigured by the network device, or duration predefined in a standard.

The following describes two manners of learning of the data rate of the wake-up signal by using the synchronization signal.

Example 1: A length of the synchronization signal indicates the data rate of the wake-up signal in the first time period.

Based on this example, the length of the synchronization signal may be associated with the data rate of the wake-up signal. The network device may indicate, through the length of the synchronization signal, a data rate of the wake-up signal in a subsequent time period (for example, denoted as the first time period), so that the terminal device may learn of the data rate of the wake-up signal in the first time period through the length of the synchronization signal. Therefore, the terminal device may blindly detect the length of the synchronization signal, to determine a data rate of a subsequent wake-up signal. This reduces signaling overheads caused by notifying the data rate of the wake-up signal by the network device.

In a possible design, the length of the synchronization signal includes a length of a first synchronization signal and a length of a second synchronization signal, the length of the first synchronization signal indicates that the data rate of the wake-up signal in the first time period is a first data rate, the length of the second synchronization signal indicates that the data rate of the wake-up signal in the first time period is a second data rate, the length of the first synchronization signal is less than the length of the second synchronization signal, and the first data rate is higher than the second data rate. For example, when a channel status between the terminal device and the network device is poor, the data rate of the wake-up signal may be reduced, and the network device may send a synchronization signal with a long length (for example, tolerance of residual time offset may be improved). It can be learned that a longer length of the synchronization signal received by the terminal device may indicate a lower data rate of the wake-up signal in a subsequent period of time. In addition, when a channel status between the terminal device and the network device is good, the data rate of the wake-up signal may be increased, and the network device may send a synchronization signal with a short length (for example, resource overheads caused by sending the synchronization signal may be reduced). It can be learned that a shorter length of the synchronization signal received by the terminal device may indicate a higher data rate of the wake-up signal in a subsequent period of time. Therefore, it may be designed that a length of the synchronization signal is inversely proportional to a data rate. In this way, a length of the synchronization signal received at a moment can match a data rate of the wake-up signal in a subsequent time period, and a data rate of the subsequent wake-up signal can be determined by blindly detecting the length of the synchronization signal.

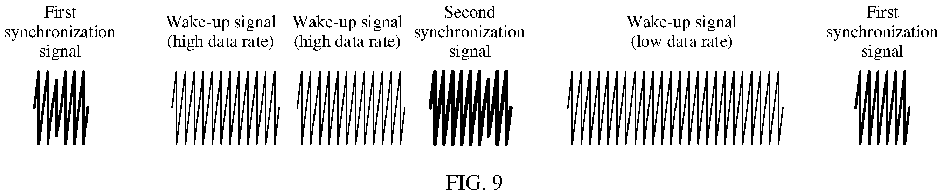

For example, FIG. 9 is a schematic diagram to which this design is applicable. As shown in FIG. 9, a wake-up signal following a short synchronization signal (that is, a first synchronization signal) is a signal with a high data rate, and a wake-up signal following a long synchronization signal (that is, a second synchronization signal) is a signal with a low data rate.

In this application, it may be set that a data rate of a synchronization signal corresponds to a data rate of a wake-up signal following the synchronization signal. For example, the network device periodically sends the synchronization signal. If a data rate of the wake-up signal to be sent by the network device is a first data rate, the network device sends the first synchronization signal; or if a data rate of the wake-up signal to be sent by the network device is a second data rate, the network device sends the second synchronization signal. Alternatively, if the network device sends the first synchronization signal at a first moment, a data rate of the wake-up signal sent by the network device in a first time period is a first data rate; or if the network device sends the second synchronization signal at a first moment, the data rate of the wake-up signal sent by the network device in a first time period is a second data rate. Correspondingly, if each terminal device in a network receives the first synchronization signal, each terminal device may learn that the data rate of the wake-up signal in the first time period is the first data rate; or if each terminal device in a network receives the second synchronization signal, each terminal device may learn that the data rate of the wake-up signal in the first time period is the second data rate. It may be understood that regardless of which terminal device or terminal devices receive the first synchronization signal (that is, the first synchronization signal sent by the network device at the first moment), the terminal devices may determine that the data rate of the wake-up signal sent by the network device in the first time period is the first data rate; and regardless of which terminal device or terminal devices receive the second synchronization signal (that is, the second synchronization signal sent by the network device at the first moment) from the network device, the terminal devices may determine that the data rate of the wake-up signal sent by the network device in the first time period is the second data rate.

Example 2: The synchronization signal includes indication information (denoted as first indication information for differentiation), and the first indication information indicates a data rate of the wake-up signal in the first time period.

Based on this example, in addition to a sequence used for a synchronization function, the synchronization signal may further include the first indication information. The first indication information indicates the data rate of the wake-up signal in a subsequent time period (for example, the first time period). In this example, a synchronization signal with one length may be designed.

In a possible manner, the first indication information may be located after the sequence used for the synchronization function.

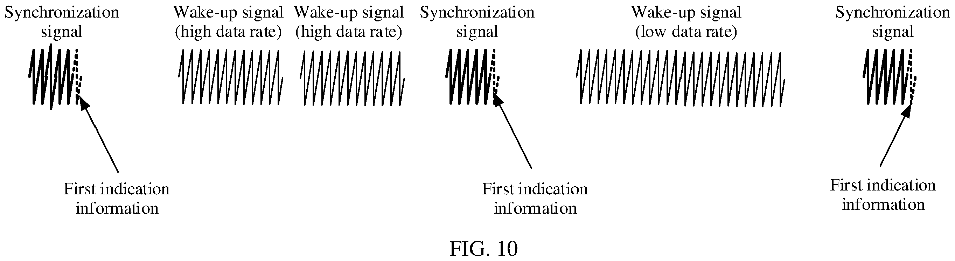

For example, FIG. 10 is a schematic diagram to which Example 2 in Manner 1 is applicable. As shown in FIG. 10, first indication information may be located after a sequence used for a synchronization function, and the first indication information carried in the synchronization signal may indicate a data rate of a wake-up signal following the synchronization signal.

The foregoing describes, with reference to Example 1 and Example 2, a manner of learning of the data rate of the wake-up signal by using the synchronization signal. The following describes a manner of learning of the data rate of the wake-up signal by using the wake-up signal.

Manner 2: A data rate of the wake-up signal is learned of by using the wake-up signal.

Optionally, the network device sends the wake-up signal through the first frequency resource, where the wake-up signal includes second indication information, and the second indication information indicates a data rate of the wake-up signal. For example, the second indication information may also be referred to as data rate indication information, and a name of the second indication information is not limited.

For example, the wake-up signal includes the second indication information, and the second indication information specifically indicates a data rate of information other than the second indication information in the wake-up signal. A data rate of the second indication information may be configured by the network device, or may be predefined. This is not limited. For example, a data rate of the second indication information is fixed, that is, a data rate of the second indication information is the same regardless of whether the paging information is a high data rate or a low data rate. In a possible design, a data rate of the second indication information may be constantly equal to a lowest data rate, to ensure robustness of the second indication information.

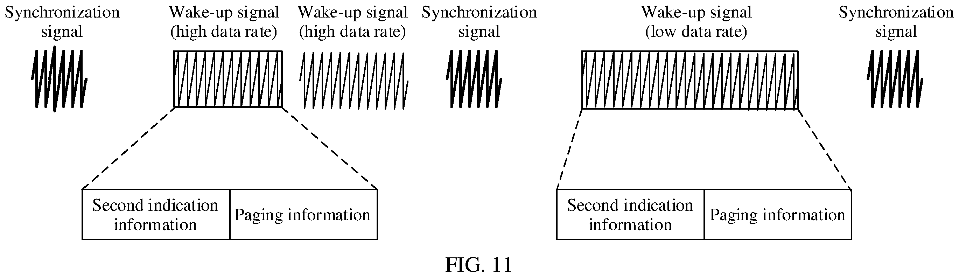

For example, FIG. 11 is a schematic diagram to which Manner 2 is applicable.

As shown in FIG. 11, a wake-up signal includes second indication information, and the second indication information indicates a data rate of information (for example, paging information) other than the second indication information in the wake-up signal. To ensure that the paging information is correctly received, the second indication information may be set before the paging information. For example, the second indication information may be located at the beginning of a wake-up signal (for example, a start location, or a location before the paging information).

### Aspect 4: Synchronization signals with different lengths

As described above, optionally, the synchronization signal includes the first synchronization signal and the second synchronization signal, and the length of the first synchronization signal is less than the length of the second synchronization signal.

In this application, the synchronization signal may include a plurality of signals with different lengths, such as, the first synchronization signal and the second synchronization signal described above, so that a synchronization signal with a proper length may not only be selected based on an actual situation for sending, but also be further used in different channel statuses to serve terminal devices in different channel statuses. The following mainly uses an example in which the synchronization signal includes the first synchronization signal and the second synchronization signal for description. It may be understood that the synchronization signal may include more signals with different lengths.

In a possible case, the network device may determine, based on a channel status, whether to send the first synchronization signal or the second synchronization signal.

In this case, the first synchronization signal and the second synchronization signal correspond to a same periodicity T. In other words, when sending the synchronization signal based on the periodicity T, the network device may determine, based on the channel status, whether to send a synchronization signal (namely, the first synchronization signal) with a shorter length or a synchronization signal (namely, the second synchronization signal) with a longer length. For example, if the network device determines that the channel status is poor, the network device may send a synchronization signal with a longer length (namely, the second synchronization signal); or if the network device determines that the channel status is good, the network device may send a synchronization signal (namely, the first synchronization signal) with a shorter length.

How to determine channel quality is not limited. For example, whether the quality of the transmitted signal meets a quality threshold may be determined. The signal quality threshold may be a predefined threshold, and may be configured by a network side. This is not limited. If the quality of the signal transmitted by the network device through the channel is greater than the signal quality threshold, the network device may learn that the channel status is good, and the network device may send a synchronization signal (that is, the first synchronization signal) with a shorter length. If the quality of the signal transmitted by the network device through the channel is less than the signal quality threshold, the network device may learn that the channel status is poor, and the network device may send a synchronization signal (that is, the second synchronization signal) with a longer length.

In another possible case, the network device periodically sends the second synchronization signal, and the network device periodically sends the first synchronization signal.

When the terminal device is in an idle state or an inactive state, the network device may not learn of a current channel status of the terminal device, and cannot adaptively change a length of the synchronization signal, that is, cannot determine whether to send the second synchronization signal or the first synchronization signal. Therefore, both the second synchronization signal and the first synchronization signal may be periodically sent.

Optionally, the network device determines a periodicity of the first synchronization signal and a periodicity of a second synchronization signal, where the periodicity of the first synchronization signal is less than the periodicity of the second synchronization signal.

For example, the network device separately configures the periodicity of the first synchronization signal and the periodicity of the second synchronization signal, or the periodicity of the first synchronization signal and the periodicity of the second synchronization signal are predefined in a standard. For details, refer to the foregoing description of the periodicity T. Details are not described herein again.

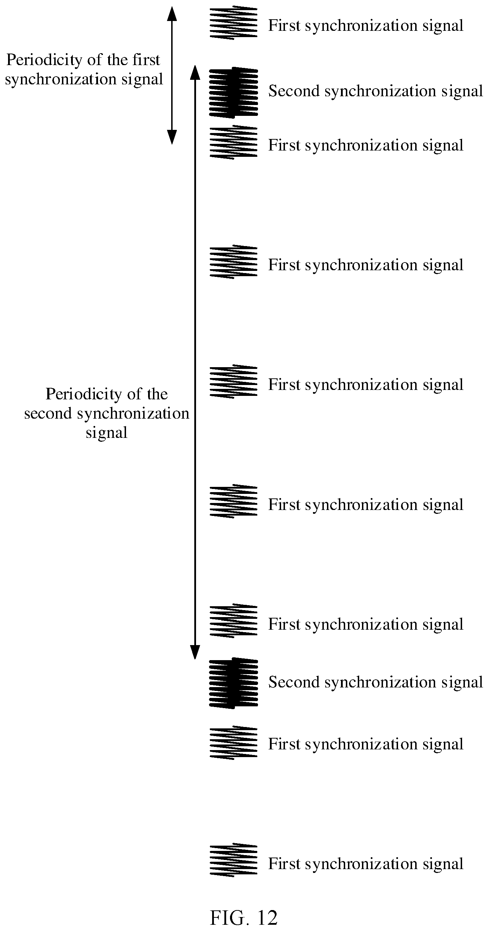

For example, FIG. 12 is a schematic diagram of periodically sending a first synchronization signal and a second synchronization signal.

As shown in FIG. 12, the network device periodically sends the first synchronization signal based on a periodicity of the first synchronization signal, and periodically sends the second synchronization signal based on a periodicity of the second synchronization signal. It can be learned that the first synchronization signal has a shorter length and a shorter periodicity, and the second synchronization signal has a longer length and a longer periodicity. A shorter periodicity indicates that a time interval at which the network device sends the synchronization signal is shorter, that is, an interval at which the terminal device performs time synchronization based on the synchronization signal is shorter. In this case, a length of the synchronization signal does not need to be designed to be excessively long, to reduce resource overheads for the synchronization signal. A longer periodicity indicates that a time interval at which the network device sends the synchronization signal is longer, that is, an interval at which the terminal device performs time synchronization based on the synchronization signal is longer. In this case, a length of the synchronization signal may be designed to be longer, to improve tolerance of residual time offset.

The periodicity of the first synchronization signal may be related to or irrelevant to the periodicity of the second synchronization signal. This is not limited.

Optionally, the periodicity of the second synchronization signal is an integer multiple of the periodicity of the first synchronization signal. For example, the periodicity of the first synchronization signal is T1, the periodicity of the second synchronization signal is T2, and T2 is an integer multiple of T1.

Optionally, a time interval between receiving the second synchronization signal by the terminal device and receiving the first synchronization signal by the terminal device is the same as the periodicity of the first synchronization signal. Based on this manner, the first synchronization signal and the second synchronization signal may be sent in a nested manner.

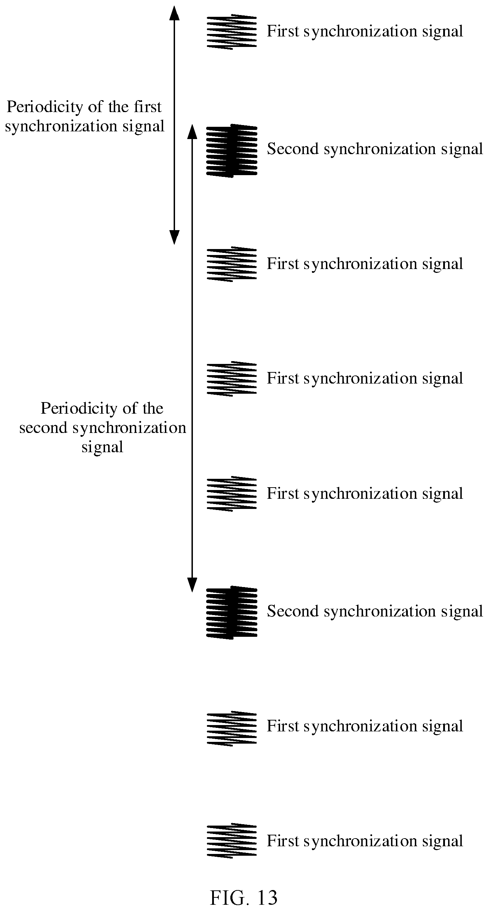

That the first synchronization signal and the second synchronization signal are sent in the nested manner may be understood as that one first synchronization signal in every N first synchronization signals is replaced with the second synchronization signal. In this case, the periodicity of the second synchronization signal is the integer multiple of the periodicity of the first synchronization signal. For example, FIG. 13 is another schematic diagram of periodically sending a first synchronization signal and a second synchronization signal. As shown in FIG. 13, a periodicity of the second synchronization signal is four times a periodicity of the first synchronization signal, and one first synchronization signal in every four first synchronization signals is replaced with the second synchronization signal.

The foregoing mainly uses the first synchronization signal and the second synchronization signal as examples for description. It may be understood that a length of the synchronization signal is not limited in this application. For example, the synchronization signal may further include more synchronization signals with lengths.

The foregoing separately describes this application from four aspects. It may be understood that the content of the foregoing aspects may be used in combination, or may be used independently. This is not limited.

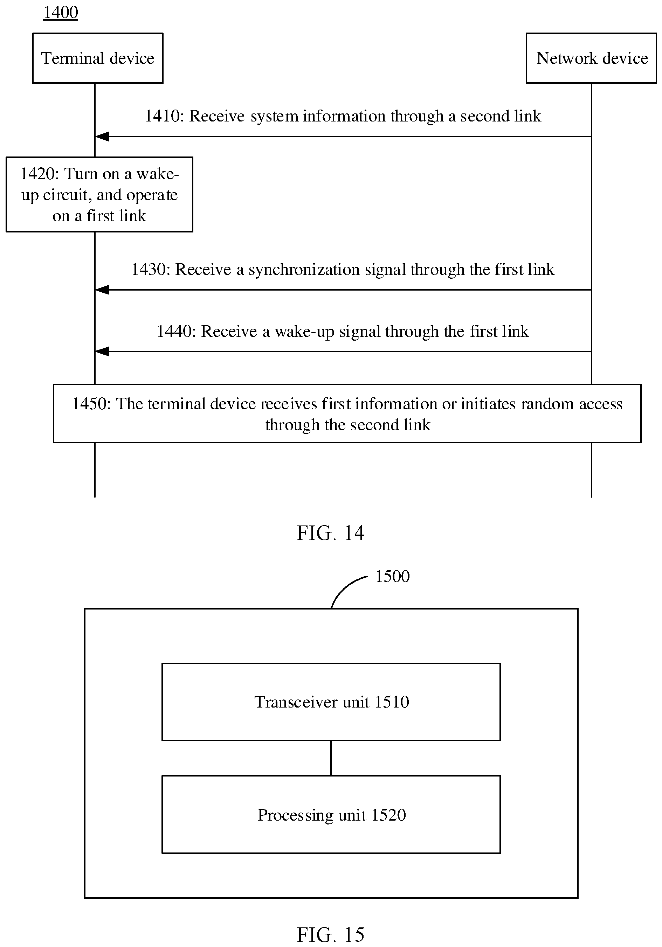

For ease of understanding, the following briefly describes, with reference to FIG. 14, a procedure to which an embodiment of this application is applicable by using an example in which the terminal device may operate on a first link and a second link. It may be understood that for terms and other descriptions in the following, refer to the foregoing descriptions. Details are not described herein again.

FIG. 14 is a schematic diagram of a signal transmission method 1400 according to an embodiment of this application. The method 1400 may include the following steps.

S 14 10: A terminal device receives system information from a network device through a second link.

It may be understood that, that the terminal device receives the system information from the network device through the second link may be replaced with that the terminal device receives, on the second link, the system information from the network device.

That the terminal device receives the system information from the network device through the second link may be replaced with that the terminal device receives the system information from the network device via a second module, may be replaced with that the terminal device receives the system information from the network device when the terminal device is in a second state, or may be replaced with that the terminal device receives, in a second mode, the system information from the network device. For details, refer to the first possible case to the fourth possible case in the method 600. Details are not described herein again.

The system information may include configuration information of a first link. The terminal device may learn of the configuration information of the first link based on the system information.

The configuration information of the first link includes, for example, one or more of the following: a transmission parameter of a wake-up signal, a transmission parameter of a synchronization signal, a periodicity T of a synchronization signal, and a transmission parameter of the first link.

For example, the configuration information of the first link includes the transmission parameter of the wake-up signal. The transmission parameter of the wake-up signal may include, for example, at least one of a time domain resource (such as a symbol) length of the wake-up signal, an SCS of the wake-up signal, and the like. The terminal device may receive, on the first link, the wake-up signal based on the transmission parameter of the wake-up signal. If the periodicity T is related to the transmission parameter of the wake-up signal, the terminal device may further determine a corresponding periodicity T based on the transmission parameter of the wake-up signal, so that the terminal device may periodically receive, on the first link, the synchronization signal based on the periodicity T. For details, refer to the description in the foregoing aspect 1, and details are not described herein again.

For another example, the configuration information of the first link includes the periodicity T. The terminal device may periodically receive, on the first link, the synchronization signal based on the periodicity T.

For another example, the configuration information of the first link includes the transmission parameter of the synchronization signal. The terminal device may receive, on the first link, the synchronization signal based on the transmission parameter of the synchronization signal. The transmission parameter of the synchronization signal may include, for example, at least one of a periodicity T, a time domain resource (such as a symbol) length of the synchronization signal, an SCS of the synchronization signal, and the like.

For another example, the configuration information of the first link includes the transmission parameter of the first link. The transmission parameter of the first link may include, for example, at least one of a time domain resource (such as a symbol) length of the first link, an SCS of the first link, and the like. The terminal device may receive, on the first link, the wake-up signal based on the transmission parameter of the first link. If the periodicity T is related to the transmission parameter of the first link, the terminal device may further determine a corresponding periodicity T based on the transmission parameter of the first link, so that the terminal device may periodically receive, on the first link, the synchronization signal based on the periodicity T. For details, refer to the description in the foregoing aspect 1, and details are not described herein again.

S 1420: The terminal device turns on the wake-up circuit, and operates on the first link.

That the terminal device operates on the first link may be replaced with that the terminal device receives a signal (for example, receives a wake-up signal and a synchronization signal) via a first module, may be replaced with that the terminal device is in a first state (or a state of the terminal device is adjusted to the first state), or may be replaced with that the terminal device receives a signal (for example, receives a wake-up signal and a synchronization signal) in a first mode. For details, refer to the first possible case to the fourth possible case in the method 600. Details are not described herein again.

In a possible case, when some conditions are met, the terminal device may turn on the wake-up circuit, and operate on the first link. In this case, the main circuit may be turned off.

For example, if a serving cell of the terminal device meets a preset condition, the terminal device may turn on the wake-up circuit, and operate on the first link. The preset condition may include, for example, a short distance between the terminal device and the network device, and/or a low moving speed of the terminal device.

The short distance between the terminal device and the network device indicates that the terminal device is located at a strong location of the network device. When the distance between the terminal device and the network device is short, the terminal device may turn on the wake-up circuit. Optionally, the terminal device may determine the distance between the terminal device and the network device by measuring signal quality (or channel quality) of the serving cell. Optionally, the terminal device may determine the moving speed of the terminal device by measuring a signal quality variation amount of the serving cell.

S1430: The terminal device receives the synchronization signal from the network device through the first link.

It may be understood that, that the terminal device receives the synchronization signal from the network device through the first link may be replaced with that the terminal device receives, on the first link, the synchronization signal from the network device.

The terminal device may periodically receive, based on the periodicity T obtained in the step S1410, the synchronization signal through the first link. Further, the terminal device may perform time synchronization based on the received synchronization signal, so that the terminal device can correctly receive the wake-up signal.

S 1440: The terminal device receives the wake-up signal from the network device through the first link.

It may be understood that, that the terminal device receives the wake-up signal from the network device through the first link may be replaced with that the terminal device receives, on the first link, the wake-up signal from the network device.

In the step S1430, the terminal device may perform synchronization based on the received synchronization signal. Therefore, the terminal device may correctly receive the wake-up signal from the network device.

If detecting no wake-up signal associated with the terminal device, the terminal device continues to receive the wake-up signal through the first link, and the second link is in an off state (or a sleep state); or if detecting a wake-up signal associated with the terminal device, the terminal device triggers to wake up the second link, that is, the second link is in an on state (or referred to as an operating state, or referred to as an active state). After the second link is turned on, the terminal device may perform a process of receiving paging and/or initiate random access.

S1450: The terminal device receives first information or initiates random access through the second link.

It may be understood that, that the terminal device receives the first information or initiates random access through the second link may be replaced with that the terminal device receives the first information or initiates random access through the second link.

In a possible case, if the wake-up signal carries some paging information, after receiving the wake-up signal through the first link, the terminal device may receive the first information through the second link (or perform a procedure of receiving paging through the second link).

In another possible case, if the wake-up signal carries complete paging information, after receiving the wake-up signal through the first link, the terminal device may determine, based on the wake-up signal, whether the terminal device is paged. If the terminal device determines, by using the wake-up signal, that the terminal device is paged, for example, the terminal device may initiate random access through the second link. That the terminal device initiates random access may include: For example, the terminal device sends a random access preamble sequence to the network device.

It may be understood that in embodiments of this application, "receiving" may also be replaced with "detecting". For example, "receiving the wake-up signal" may also be replaced with "detecting the wake-up signal".

It may be further understood that, in some of the foregoing embodiments, "the first link" and "the second link" are mainly used as an example for description. "The first link" may also be replaced with "the first module (or a first circuit)" or may be replaced with "in the first state", or may be replaced with "via the first mode". For example, "the terminal device receives the synchronization signal on the first link" may be replaced with "the terminal device receives the synchronization signal via the first module (or the first circuit)". "The second link" may also be replaced with "the second module (or a second circuit)", or may be replaced with "in the second state", or may be replaced with "via the second mode". For example, "the terminal device receives a first signal on the second link" may be replaced with "the terminal device receives the first signal via the second module (or the second circuit)".

It may be further understood that, in some of the foregoing embodiments, "through the first link" and "through the second link" are mentioned for a plurality of times, and a person skilled in the art may understand meanings of "through the first link" and "through the second link". For example, "receiving a signal through the first link" may be replaced with "receiving a signal on the first link", or may be replaced with "receiving a signal through the first link".

It may be further understood that, in some of the foregoing embodiments, "transmitting" is mentioned. Unless otherwise specified, transmitting includes receiving and/or sending. For example, transmitting a signal may include receiving a signal and/or sending a signal.

It may be further understood that, in embodiments of this application, "the signal" may also be replaced with "a sequence" or "a sequence with signals". For example, "the wake-up signal" may be replaced with "the sequence" or "the sequence with wake-up signals". A person skilled in the art should understand a meaning of a relationship between the signal and the sequence. For example, after obtaining a sequence with wake-up signals, the network device may map the sequence with wake-up signals of a specific length to a transmission resource (for example, a time-frequency resource), generate a wake-up signal, and send the wake-up signal to the terminal device.

It may be further understood that in embodiments of this application, interaction between the terminal device and the network device is mainly used as an example for description. This application is not limited thereto. The terminal device may be replaced with a receive end device, and the receive end device may be a terminal device or a network device. The network device may be replaced with a transmit end device, and the transmit end device may be a terminal device or a network device. For example, "the terminal device" may be replaced with "a first terminal device", and "the network device" may be replaced with "a second terminal device".

It can be further understood that the examples in FIG. 7 to FIG. 14 in embodiments of this application are only intended to help a person skilled in the art understand embodiments of this application, but are not intended to limit embodiments of this application to specific scenarios in the examples. It is clear that a person skilled in the art may make various equivalent modifications or changes based on the examples in FIG. 7 to FIG. 14, and such modifications or changes also fall within the scope of embodiments of this application.

It may be further understood that, in some scenarios, some optional features in embodiments of this application may be independently implemented without depending on another feature. Alternatively, in some scenarios, the optional features are combined with another feature. This is not limited.

It may be further understood that the solutions in embodiments of this application may be appropriately combined for use, and explanations or descriptions of terms in the embodiments may be mutually referred to or explained in the embodiments. This is not limited.

It may be further understood that in the foregoing method embodiments, the method and the operation implemented by the terminal device may also be implemented by a component (for example, a chip or a circuit) of the terminal device. In addition, the method and the operation implemented by a network device may also be implemented by a component (for example, a chip or a circuit) of the network device. This is not limited.

Corresponding to the methods provided in the foregoing method embodiments, an embodiment of this application further provides a corresponding apparatus. The apparatus includes a corresponding module configured to perform the foregoing method embodiments. The module may be software, hardware, or a combination of software and hardware. It may be understood that the technical features described in the method embodiments are also applicable to the following apparatus embodiments.

FIG. 15 is a schematic block diagram of a communication apparatus according to an embodiment of this application. An apparatus 1500 includes a transceiver unit 1510 and a processing unit 1520. The transceiver unit 1510 may be configured to implement a corresponding communication function. The transceiver unit 1510 may also be referred to as a communication interface or a communication unit. The processing unit 1520 may be configured to perform data or signal processing.

Optionally, the apparatus 1500 may further include a storage unit, the storage unit may be configured to store instructions and/or data, and the processing unit 1520 may read the instructions and/or the data in the storage unit, so that the apparatus implements actions of the terminal device in the foregoing method embodiments.

The apparatus 1500 may be configured to perform an action performed by the terminal device in the foregoing method embodiments. In this case, the apparatus 1500 may be the terminal device or a component included in the terminal device. The transceiver unit 1510 is configured to perform receiving or sending related operations on a terminal device side in the foregoing method embodiments. The processing unit 1520 is configured to perform processing-related operations on the terminal device side in the foregoing method embodiments.

When the apparatus 1500 is configured to implement the functions of the terminal device in the foregoing method embodiments, the processing unit 1520 is configured to determine a periodicity of a synchronization signal; and the transceiver unit 1510 is configured to periodically receive the synchronization signal based on the periodicity of the synchronization signal through a first frequency resource, where the first frequency resource is further used to transmit a wake-up signal, and the wake-up signal indicates information about one or more terminal devices that need to receive paging.

The apparatus 1500 may implement the steps or procedures performed by the terminal device in the method embodiments according to embodiments of this application. The apparatus 1500 may include units configured to perform the methods performed by the terminal device in the embodiment shown in FIG. 6.

When the apparatus 1500 is configured to implement the functions of the network device in the foregoing method embodiments, the processing unit 1520 is configured to determine a periodicity of a synchronization signal; and the transceiver unit 1510 is configured to periodically send the synchronization signal based on the periodicity of the synchronization signal through a first frequency resource, where the first frequency resource is further used to transmit a wake-up signal, and the wake-up signal indicates information about one or more terminal devices that need to receive paging.

The apparatus 1500 may implement the steps or procedures performed by the network device in the method embodiments according to embodiments of this application. The apparatus 1500 may include units configured to perform the methods performed by the network device in the embodiment shown in FIG. 6.

For more detailed descriptions of the apparatus 1500, refer to related descriptions in the foregoing method embodiments. Details are not described herein again.

It should also be understood that the apparatus 1500 herein is embodied in a form of a functional unit. The term "unit" herein may refer to an application-specific integrated circuit (application-specific integrated circuit, ASIC), an electronic circuit, a processor (for example, a shared processor, an application-specific processor, or a group processor) configured to execute one or more software or firmware programs and a memory, a combined logic circuit, and/or another suitable assembly that supports the described functions In an optional example, a person skilled in the art may understand that, the apparatus 1500 may be specifically the terminal device in the foregoing embodiments; and the apparatus 1500 may be configured to perform procedures and/or steps corresponding to the terminal device in the foregoing method embodiments. To avoid repetition, details are not described herein.

The apparatus 1500 in each of the foregoing solutions has a function of implementing corresponding steps performed by a device (for example, a terminal device or a network device) in the foregoing method. The function may be implemented by hardware, or may be implemented by hardware executing corresponding software. The hardware or the software includes one or more modules corresponding to the foregoing functions. For example, the transceiver unit may be replaced with a transceiver (for example, the sending unit in the transceiver unit may be replaced with a transmitter, and the receiving unit in the transceiver unit may be replaced with a receiver). Another unit, such as a processing unit, may be replaced with a processor to separately perform a sending and receiving operation and a related processing operation in each method embodiment.

In addition, the transceiver unit 1510 may alternatively be a transceiver circuit (for example, may include a receiver circuit and a sending circuit), and the processing unit may be a processing circuit.

It should be noted that the apparatus in FIG. 15 may be the network element or the device in the foregoing embodiments, or may be a chip or a chip system, for example, a system-on-a-chip (system-on-a-chip, SoC). The transceiver unit may be an input/output circuit or a communication interface. The processing unit is a processor, a microprocessor, or an integrated circuit integrated on the chip. This is not limited herein.

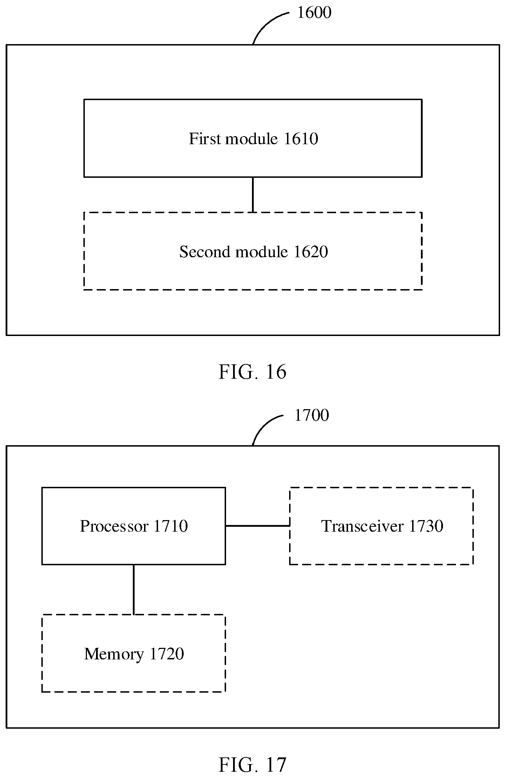

FIG. 16 is a schematic block diagram of another communication apparatus according to an embodiment of this application. An apparatus 1600 includes a first module 1610. The first module 1610 may be, for example, a wake-up circuit, or may be a module (for example, a receiving module) of a wake-up circuit. The first module 1610 may be configured to perform an operation performed by the wake-up circuit on the terminal device side in the foregoing method embodiment, may be configured to perform an operation performed on the terminal device side through the first link in the foregoing method embodiment, may be configured to perform an operation performed when the terminal device is in a first state in the foregoing method embodiment, or may be configured to perform an operation performed when the terminal device uses a first mode in the foregoing method embodiment.

For example, the terminal device receives a wake-up signal via the first module 1610. For another example, the terminal device receives a synchronization signal via the first module 1610.

Optionally, the apparatus 1600 includes a second module 1620. The second module 1620 may be, for example, a main circuit, or may be a module (for example, a receiving module) of a main circuit. The first module 1610 and the second module 1620 may be integrated together, or may be disposed separately. The second module 1620 may be configured to perform an operation performed by the main circuit on the terminal device side in the foregoing method embodiment, may be configured to perform an operation performed by the terminal device side through the second link in the foregoing method embodiment, may be configured to perform an operation performed when the terminal device is in a second state in the foregoing method embodiment, or may be configured to perform an operation performed when the terminal device uses a second mode in the foregoing method embodiment.

For example, the terminal device receives a first signal via the second module 1610. For another example, the terminal device sends a second signal via the second module 1610. For another example, the terminal device initiates random access via the second module 1610, for example, sends a random access preamble sequence.

FIG. 17 is a schematic block diagram of still another communication apparatus according to an embodiment of this application. An apparatus 1700 includes a processor 1710. The processor 1710 is coupled to a memory 1720. The memory 1720 is configured to store a computer program or instructions and/or data. The processor 1710 is configured to execute the computer program or the instructions stored in the memory 1720, or read data stored in the memory 1720, to perform the methods in the foregoing method embodiments.

In some embodiments, there are one or more processors 1710.

In some embodiments, there are one or more memories 1720.

In some embodiments, the memory 1720 and the processor 1710 are integrated together, or are disposed separately.

In some embodiments, as shown in FIG. 17, the apparatus 1700 further includes a transceiver 1730. The transceiver 1730 is configured to receive and/or send a signal. For example, the processor 1710 is configured to control the transceiver 1730 to receive and/or send a signal.

In a solution, the apparatus 1700 is configured to implement operations performed by a device (for example, a terminal device or a network device) in the foregoing method embodiments.

For example, the processor 1710 is configured to execute the computer program or the instructions stored in the memory 1720, to implement related operations of the network device in the foregoing method embodiments.

For another example, the processor 1710 is configured to execute the computer program or the instructions stored in the memory 1720, to implement related operations of the terminal device in the foregoing method embodiments.

It should be understood that, the processor mentioned in embodiments of this application may be a central processing unit (central processing unit, CPU), and may further be another general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or a transistor logic device, a discrete hardware assembly, or the like. The general-purpose processor may be a microprocessor, the processor may be any conventional processor, or the like.

It should be further understood that the memory mentioned in embodiments of this application may be a volatile memory and/or a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM includes the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware assembly, a memory (storage module) may be integrated into the processor.

It should be further noted that the memory described in this specification is intended to include, but is not limited to, these memories and any other memory of a suitable type.

An embodiment of this application further provides a computer-readable storage medium. The computer-readable storage medium stores computer instructions for implementing the method performed by a device (for example, a terminal device or a network device) in the foregoing method embodiments.

For example, when a computer program is executed by a computer, the computer is enabled to implement the methods performed by the network device in the foregoing method embodiments.

For another example, when a computer program is executed by a computer, the computer is enabled to implement the methods performed by the terminal device in the foregoing method embodiments.

An embodiment of this application further provides a computer program product, including instructions. When the instructions are executed by a computer, the method performed by a device (for example, a terminal device or a network device) in the foregoing method embodiments is implemented.

For explanation and beneficial effect of related content in any apparatus provided above, refer to the corresponding method embodiment provided above. Details are not described herein again.

In the several embodiments provided in this application, it should be understood that the disclosed apparatus and method may be implemented in other manners. For example, the described apparatus embodiment is only an example. For example, division into the units is only logical function division and may be other division during actual implementation. For example, a plurality of units or components may be combined or integrated into another system, or some features may be ignored or not performed. In addition, the displayed or discussed mutual couplings, direct couplings, or communication connections may be implemented through some interfaces. Indirect couplings or communication connections between the apparatuses or units may be implemented in an electrical form, a mechanical form, or another form.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a special-purpose computer, a computer network, or other programmable apparatuses. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, and microwave, or the like) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (solid-state disk, SSD)), or the like. For example, the usable medium may include but is not limited to any medium that can store program code, for example, a USB flash drive, a removable hard disk, a read-only memory (read-only memory, ROM), a random access memory (random access memory, RAM), a magnetic disk, or an optical disc.

Based on the foregoing descriptions, this application further provides the following embodiments:
Embodiment 1: A signal transmission method, including:
   A terminal device determines a periodicity of a synchronization signal; and
   the terminal device periodically receives the synchronization signal based on the periodicity of the synchronization signal through a first frequency resource, where the first frequency resource is further used to transmit a wake-up signal, and the wake-up signal indicates information about one or more terminal devices that need to receive paging.
Embodiment 2: The method according to Embodiment 1, where
   the periodicity of the synchronization signal is associated with a transmission parameter of the wake-up signal.
Embodiment 3: The method according to Embodiment 1 or 2, where the transmission parameter of the wake-up signal includes a time domain resource length; and
   the time domain resource length includes a first time domain resource length and a second time domain resource length, a first periodicity of the synchronization signal is associated with the first time domain resource length, a second periodicity of the synchronization signal is associated with the second time domain resource length, the first time domain resource length is less than the second time domain resource length, and the first periodicity is less than the second periodicity.
Embodiment 4: The method according to Embodiment 1 or 2, where
   the transmission parameter of the wake-up signal includes a subcarrier spacing; and
   the subcarrier spacing includes a first subcarrier spacing and a second subcarrier spacing, a first periodicity of the synchronization signal is associated with the first subcarrier spacing, a second periodicity of the synchronization signal is associated with the second subcarrier spacing, the first subcarrier spacing is greater than the second subcarrier spacing, and the first periodicity is less than the second periodicity.
Embodiment 5: The method according to any one of Embodiments 1 to 4, where
   the periodicity of the synchronization signal is configured by a network device; or
   the periodicity of the synchronization signal is predefined in a standard.
Embodiment 6: The method according to Embodiment 5, where if the periodicity of the synchronization signal is configured by the network device, the method further includes:
   the terminal device receives first configuration information, where the first configuration information is used to configure the periodicity of the synchronization signal.
Embodiment 7: The method according to any one of Embodiments 1 to 6, where the method further includes:
   the terminal device receives second configuration information, where the second configuration information is used to configure a pattern pattern of the synchronization signal; and
   that the terminal device periodically receives the synchronization signal based on the periodicity of the synchronization signal through a first frequency resource includes:
      the terminal device receives the synchronization signal based on the periodicity of the synchronization signal and the pattern of the synchronization signal through the first frequency resource.
Embodiment 8: The method according to Embodiment 7, where the method further includes:
   the terminal device receives a first signal and/or sends a second signal at a first time domain location through the first frequency resource, where a time domain location at which the synchronization signal is sent and that is represented by the pattern of the synchronization signal does not include the first time domain location;
   the first signal includes one or more of the following: a synchronization signal block SSB, a physical downlink control channel PDCCH, a physical downlink shared channel PDSCH, a channel state information-reference signal CSI-RS, a phase tracking reference signal PT-RS, a positioning reference signal PRS, and a demodulation reference signal DMRS; and
   the second signal includes one or more of the following: a demodulation reference signal DMRS, a physical uplink shared channel PUSCH, a physical uplink control channel PUCCH, and a sounding reference signal SRS.
Embodiment 9: The method according to Embodiment 8, where the terminal device includes a first module and a second module; and
   the terminal device receives the synchronization signal and the wake-up signal via the first module, and the terminal device receives the first signal and/or sends the second signal via the second module.
Embodiment 10: The method according to any one of Embodiments 1 to 9, where that the terminal device periodically receives the synchronization signal based on the periodicity of the synchronization signal through a first frequency resource includes:
   the terminal device receives, based on the periodicity of the synchronization signal, the synchronization signal at a first moment through the first frequency resource, where the synchronization signal indicates a data rate of the wake-up signal in a first time period, and the first time period is after the first moment.
Embodiment 11: The method according to Embodiment 10, where
   a length of the synchronization signal indicates the data rate of the wake-up signal in the first time period; or
   the synchronization signal includes first indication information, and the first indication information indicates the data rate of the wake-up signal in the first time period.
Embodiment 12: The method according to Embodiment 11, where the length of the synchronization signal includes a length of a first synchronization signal and a length of a second synchronization signal, the length of the first synchronization signal indicates that the data rate of the wake-up signal in the first time period is a first data rate, the length of the second synchronization signal indicates that the data rate of the wake-up signal in the first time period is a second data rate, the length of the first synchronization signal is less than the length of the second synchronization signal, and the first data rate is higher than the second data rate.
Embodiment 13: The method according to any one of Embodiments 10 to 12, where the first time period is after the first moment and before a second moment, the second moment is a moment at which the terminal device receives an i^{th} synchronization signal after the first moment, and i is an integer greater than or equal to 1.
Embodiment 14: The method according to any one of Embodiments 1 to 9, where the method further includes:
   the terminal device receives the wake-up signal through the first frequency resource, where the wake-up signal includes second indication information, and the second indication information indicates a data rate of the wake-up signal.
Embodiment 15: The method according to Embodiment 14, where the second indication information specifically indicates a data rate of information other than the second indication information in the wake-up signal, and a data rate of the second indication information is configured by the network device or predefined.
Embodiment 16: The method according to any one of Embodiments 1 to 15, where the length of the synchronization signal includes the length of the first synchronization signal and the length of the second synchronization signal, the length of the first synchronization signal is less than the length of the second synchronization signal, and a periodicity of the first synchronization signal is less than a periodicity of the second synchronization signal.
Embodiment 17: The method according to Embodiment 16, where
   the periodicity of the second synchronization signal is an integer multiple of the periodicity of the first synchronization signal, and a time interval between receiving the second synchronization signal by the terminal device and receiving the first synchronization signal by the terminal device is the same as the periodicity of the first synchronization signal.
Embodiment 18: The method according to any one of Embodiments 1 to 17, where
   a waveform of the synchronization signal is the same as a waveform of the wake-up signal, and/or a modulation scheme of the synchronization signal is the same as a modulation scheme of the wake-up signal.
Embodiment 19: The method according to any one of Embodiments 1 to 18, where
   the modulation scheme of the synchronization signal and the modulation scheme of the wake-up signal are on-off keying OOK; and/or
   the waveform of the synchronization signal and/or the waveform of the wake-up signal are/is OOK.
Embodiment 20: The method according to any one of Embodiments 1 to 19, where the method further includes:
   the terminal device receives the wake-up signal from the network device through the first frequency resource, where the wake-up signal indicates the information about the one or more terminal devices that need to receive paging and includes the terminal device; and
   the terminal device receives first information from the network device and/or initiates random access, where
   the first information includes one or more of the following information: paging downlink control information DCI, a paging message paging message, and a paging early indication PEI.
Embodiment 21: The method according to Embodiment 20, where that the terminal device receives first information from the network device and/or initiates random access includes:
   the terminal device receives the first information from the network device and/or initiates random access through a second frequency resource.
Embodiment 22: The method according to Embodiment 20 or 21, where the terminal device includes a first module and a second module; and
   the terminal device receives the synchronization signal and the wake-up signal via the first module, and the terminal device receives the first information and/or initiates random access via the second module.
Embodiment 23: A signal transmission method, including:
   a network device determines a periodicity of a synchronization signal; and
   the network device periodically sends the synchronization signal based on the periodicity of the synchronization signal through a first frequency resource, where the first frequency resource is further used to transmit a wake-up signal, and the wake-up signal indicates information about one or more terminal devices that need to receive paging.
Embodiment 24: The method according to Embodiment 23, where
   the periodicity of the synchronization signal is associated with a transmission parameter of the wake-up signal.
Embodiment 25: The method according to Embodiment 24, where the method further includes:
   the network device broadcasts system information, where the system information includes the transmission parameter of the wake-up signal.
Embodiment 26: The method according to any one of Embodiments 23 to 25, where the transmission parameter of the wake-up signal includes a time domain resource length; and
   the time domain resource length includes a first time domain resource length and a second time domain resource length, a first periodicity of the synchronization signal is associated with the first time domain resource length, a second periodicity of the synchronization signal is associated with the second time domain resource length, the first time domain resource length is less than the second time domain resource length, and the first periodicity is less than the second periodicity.
Embodiment 27: The method according to any one of Embodiments 23 to 25, where
   the transmission parameter of the wake-up signal includes a subcarrier spacing; and
   the subcarrier spacing includes a first subcarrier spacing and a second subcarrier spacing, a first periodicity of the synchronization signal is associated with the first subcarrier spacing, a second periodicity of the synchronization signal is associated with the second subcarrier spacing, the first subcarrier spacing is greater than the second subcarrier spacing, and the first periodicity is less than the second periodicity.
Embodiment 28: The method according to any one of Embodiments 23 to 27, where
   the periodicity of the synchronization signal is configured by the network device; or
   the periodicity of the synchronization signal is predefined in a standard.
Embodiment 29: The method according to Embodiment 28, where if the periodicity of the synchronization signal is configured by the network device, the method further includes:
   the network device sends first configuration information, where the first configuration information is used to configure the periodicity of the synchronization signal.
Embodiment 30: The method according to any one of Embodiments 23 to 29, where the method further includes:
   the network device sends second configuration information, where the second configuration information is used to configure a pattern pattern of the synchronization signal; and
   that the network device periodically sends the synchronization signal based on the periodicity of the synchronization signal through a first frequency resource includes:
      the network device sends the synchronization signal based on the periodicity of the synchronization signal and the pattern of the synchronization signal through the first frequency resource.
Embodiment 31: The method according to Embodiment 30, where the method further includes:
   the network device sends a first signal and/or receives a second signal at a first time domain location through the first frequency resource, where a time domain location at which the synchronization signal is sent and that is represented by the pattern of the synchronization signal does not include the first time domain location;
   the first signal includes one or more of the following: a synchronization signal block SSB, a physical downlink control channel PDCCH, a physical downlink shared channel PDSCH, a channel state information-reference signal CSI-RS, a phase tracking reference signal PT-RS, a positioning reference signal PRS, and a demodulation reference signal DMRS; and
   the second signal includes one or more of the following: a demodulation reference signal DMRS, a physical uplink shared channel PUSCH, a physical uplink control channel PUCCH, and a sounding reference signal SRS.
Embodiment 32: The method according to Embodiment 31, where the network device includes a first module and a second module; and
   the network device sends the synchronization signal and the wake-up signal via the first module, and the network device sends the first signal and/or receives the second signal via the second module.
Embodiment 33: The method according to any one of Embodiments 23 to 32, where that the terminal device periodically receives the synchronization signal based on the periodicity of the synchronization signal through a first frequency resource includes:
   the network device sends, based on the periodicity of the synchronization signal, the synchronization signal at a first moment through the first frequency resource, where the synchronization signal indicates a data rate of the wake-up signal in a first time period, and the first time period is after the first moment.
Embodiment 34: The method according to Embodiment 33, where
   a length of the synchronization signal indicates the data rate of the wake-up signal in the first time period; or
   the synchronization signal includes first indication information, and the first indication information indicates the data rate of the wake-up signal in the first time period.
Embodiment 35: The method according to Embodiment 34, where the length of the synchronization signal includes a length of a first synchronization signal and a length of a second synchronization signal, the length of the first synchronization signal indicates that the data rate of the wake-up signal in the first time period is a first data rate, the length of the second synchronization signal indicates that the data rate of the wake-up signal in the first time period is a second data rate, the length of the first synchronization signal is less than the length of the second synchronization signal, and the first data rate is higher than the second data rate.
Embodiment 36: The method according to any one of Embodiments 33 to 35, where the first time period is after the first moment and before a second moment, the second moment is a moment at which the network device sends an i^{th} synchronization signal after the first moment, and i is an integer greater than or equal to 1.
Embodiment 37: The method according to any one of Embodiments 23 to 32, where the method further includes:
   the network device sends the wake-up signal through the first frequency resource, where the wake-up signal includes second indication information, and the second indication information indicates a data rate of the wake-up signal.
Embodiment 38: The method according to Embodiment 37, where the second indication information specifically indicates a data rate of information other than the second indication information in the wake-up signal, and a data rate of the second indication information is configured by the network device or predefined.
Embodiment 39: The method according to any one of Embodiments 23 to 38, where the length of the synchronization signal includes the length of the first synchronization signal and the length of the second synchronization signal, the length of the first synchronization signal is less than the length of the second synchronization signal, and a periodicity of the first synchronization signal is less than a periodicity of the second synchronization signal.
Embodiment 40: The method according to Embodiment 39, where
   the periodicity of the second synchronization signal is an integer multiple of the periodicity of the first synchronization signal, and a time interval between sending the second synchronization signal by the network device and sending the first synchronization signal by the network device is the same as the periodicity of the first synchronization signal.
Embodiment 41: The method according to any one of Embodiments 23 to 40, where
   a waveform of the synchronization signal is the same as a waveform of the wake-up signal, and/or a modulation scheme of the synchronization signal is the same as a modulation scheme of the wake-up signal.
Embodiment 42: The method according to any one of Embodiments 23 to 41, where
   the modulation scheme of the synchronization signal and the modulation scheme of the wake-up signal are on-off keying OOK; and/or
   the waveform of the synchronization signal and/or the waveform of the wake-up signal are/is OOK.
Embodiment 43: The method according to any one of Embodiments 23 to 42, where the method further includes:
   the network device sends the wake-up signal through the first frequency resource, where the wake-up signal indicates the information about the one or more terminal devices that need to receive paging, and the one or more terminal devices include a first terminal device; and
   the network device sends first information to the first terminal device and/or receives a random access preamble sequence from the first terminal device, where
   the first information includes one or more of the following information: paging downlink control information DCI, a paging message paging message, and a paging early indication PEI.
Embodiment 44: The method according to Embodiment 43, where that the network device sends first information to the first terminal device and/or receives a random access preamble sequence from the first terminal device includes:
   the network device sends the first information to the first terminal device and/or receives the random access preamble sequence from the first terminal device through a second frequency resource.
Embodiment 45: The method according to Embodiment 43 or 44, where the network device includes a first module and a second module; and
   the network device sends the synchronization signal and the wake-up signal via the first module, and the network device sends the first information to the first terminal device and/or receives the random access preamble sequence from the first terminal device via the second module.

The foregoing descriptions are only specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A signal transmission method, comprising:
determining, by a terminal device, a periodicity of a synchronization signal; and
periodically receiving, by the terminal device, the synchronization signal based on the periodicity of the synchronization signal through a first frequency resource, wherein the first frequency resource is further used to transmit a wake-up signal, and the wake-up signal indicates information about one or more terminal devices that need to receive paging.

2. The method according to claim 1, wherein
the periodicity of the synchronization signal is associated with a transmission parameter of the wake-up signal.

3. The method according to claim 1 or 2, wherein the transmission parameter of the wake-up signal comprises a time domain resource length; and
the time domain resource length comprises a first time domain resource length and a second time domain resource length, a first periodicity of the synchronization signal is associated with the first time domain resource length, a second periodicity of the synchronization signal is associated with the second time domain resource length, the first time domain resource length is less than the second time domain resource length, and the first periodicity is less than the second periodicity.

4. The method according to claim 1 or 2, wherein
the transmission parameter of the wake-up signal comprises a subcarrier spacing; and
the subcarrier spacing comprises a first subcarrier spacing and a second subcarrier spacing, a first periodicity of the synchronization signal is associated with the first subcarrier spacing, a second periodicity of the synchronization signal is associated with the second subcarrier spacing, the first subcarrier spacing is greater than the second subcarrier spacing, and the first periodicity is less than the second periodicity.

5. The method according to any one of claims 1 to 4, wherein
the periodicity of the synchronization signal is configured by a network device; or
the periodicity of the synchronization signal is predefined in a standard.

6. The method according to claim 5, wherein if the periodicity of the synchronization signal is configured by the network device, the method further comprises:
receiving, by the terminal device, first configuration information, wherein the first configuration information is used to configure the periodicity of the synchronization signal.

7. The method according to any one of claims 1 to 6, wherein the method further comprises:
receiving, by the terminal device, second configuration information, wherein the second configuration information is used to configure a pattern pattern of the synchronization signal; and
the periodically receiving, by the terminal device, the synchronization signal based on the periodicity of the synchronization signal through a first frequency resource comprises:
receiving, by the terminal device, the synchronization signal based on the periodicity of the synchronization signal and the pattern of the synchronization signal through the first frequency resource.

8. The method according to claim 7, wherein the method further comprises:
receiving, by the terminal device, a first signal and/or sending a second signal at a first time domain location through the first frequency resource, wherein a time domain location at which the synchronization signal is sent and that is represented by the pattern of the synchronization signal does not comprise the first time domain location, wherein
the first signal comprises any one of the following: a synchronization signal block SSB, a physical downlink control channel PDCCH, a physical downlink shared channel PDSCH, a channel state information-reference signal CSI-RS, a phase tracking reference signal PT-RS, a positioning reference signal PRS, and a demodulation reference signal DMRS; and
the second signal comprises any one of the following: a demodulation reference signal DMRS, a physical uplink shared channel PUSCH, a physical uplink control channel PUCCH, and a sounding reference signal SRS.

9. The method according to claim 8, wherein the terminal device comprises a first module and a second module; and
the terminal device receives the synchronization signal and the wake-up signal via the first module, and the terminal device receives the first signal and/or sends the second signal via the second module.

10. The method according to any one of claims 1 to 9, wherein the periodically receiving, by the terminal device, the synchronization signal based on the periodicity of the synchronization signal through a first frequency resource comprises:
receiving, by the terminal device based on the periodicity of the synchronization signal, the synchronization signal at a first moment through the first frequency resource, wherein the synchronization signal indicates a data rate of the wake-up signal in a first time period, and the first time period is after the first moment.

11. The method according to claim 10, wherein
a length of the synchronization signal indicates the data rate of the wake-up signal in the first time period; or
the synchronization signal comprises first indication information, and the first indication information indicates the data rate of the wake-up signal in the first time period.

12. The method according to claim 11, wherein the length of the synchronization signal comprises a length of a first synchronization signal and a length of a second synchronization signal, the length of the first synchronization signal indicates that the data rate of the wake-up signal in the first time period is a first data rate, the length of the second synchronization signal indicates that the data rate of the wake-up signal in the first time period is a second data rate, the length of the first synchronization signal is less than the length of the second synchronization signal, and the first data rate is higher than the second data rate.

13. The method according to any one of claims 10 to 12, wherein the first time period is after the first moment and before a second moment, the second moment is a moment at which the terminal device receives an i^{th} synchronization signal after the first moment, and i is an integer greater than or equal to 1.

14. The method according to any one of claims 1 to 9, wherein the method further comprises:
receiving, by the terminal device, the wake-up signal through the first frequency resource, wherein the wake-up signal comprises second indication information, and the second indication information indicates a data rate of the wake-up signal.

15. The method according to claim 14, wherein the second indication information specifically indicates a data rate of information other than the second indication information in the wake-up signal, and a data rate of the second indication information is configured by the network device or predefined.

16. The method according to any one of claims 1 to 15, wherein the length of the synchronization signal comprises the length of the first synchronization signal and the length of the second synchronization signal, the length of the first synchronization signal is less than the length of the second synchronization signal, and a periodicity of the first synchronization signal is less than a periodicity of the second synchronization signal.

17. The method according to claim 16, wherein
the periodicity of the second synchronization signal is an integer multiple of the periodicity of the first synchronization signal, and a time interval between receiving the second synchronization signal by the terminal device and receiving the first synchronization signal by the terminal device is the same as the periodicity of the first synchronization signal.

18. The method according to any one of claims 1 to 17, wherein
a waveform of the synchronization signal is the same as a waveform of the wake-up signal, and/or a modulation scheme of the synchronization signal is the same as a modulation scheme of the wake-up signal.

19. The method according to any one of claims 1 to 18, wherein
the modulation scheme of the synchronization signal and the modulation scheme of the wake-up signal are on-off keying OOK; and/or
the waveform of the synchronization signal and/or the waveform of the wake-up signal are/is OOK.

20. The method according to any one of claims 1 to 19, wherein the method further comprises:
receiving, by the terminal device, the wake-up signal from the network device through the first frequency resource, wherein the wake-up signal indicates the information about the one or more terminal devices that need to receive paging and comprises the terminal device; and
receiving, by the terminal device, first information from the network device and/or initiating random access, wherein
the first information comprises one or more of the following information: paging downlink control information DCI, a paging message paging message, and a paging early indication PEI.

21. The method according to claim 20, wherein the receiving, by the terminal device, first information from the network device and/or initiating random access comprises:
receiving, by the terminal device, the first information from the network device and/or initiating random access through a second frequency resource.

22. The method according to claim 20 or 21, wherein the terminal device comprises the first module and the second module; and
the terminal device receives the synchronization signal and the wake-up signal via the first module, and the terminal device receives the first information and/or initiates random access via the second module.

23. A signal transmission method, comprising:
determining, by a network device, a periodicity of a synchronization signal; and
periodically sending, by the network device, the synchronization signal based on the periodicity of the synchronization signal through a first frequency resource, wherein the first frequency resource is further used to transmit a wake-up signal, and the wake-up signal indicates information about one or more terminal devices that need to receive paging.

24. The method according to claim 23, wherein
the periodicity of the synchronization signal is associated with a transmission parameter of the wake-up signal.

25. The method according to claim 24, wherein the method further comprises:
broadcasting, by the network device, system information, wherein the system information comprises the transmission parameter of the wake-up signal.

26. The method according to any one of claims 23 to 25, wherein the method further comprises:
sending, by the network device, the wake-up signal through the first frequency resource, wherein the wake-up signal indicates the information about the one or more terminal devices that need to receive paging, and the one or more terminal devices comprise a first terminal device; and
sending, by the network device, first information to the first terminal device and/or receiving a random access preamble sequence from the first terminal device, wherein
the first information comprises one or more of the following information: paging downlink control information DCI, a paging message paging message, and a paging early indication PEI.

27. The method according to claim 26, wherein the sending, by the network device, first information to the first terminal device and/or receiving a random access preamble sequence from the first terminal device comprises:
sending, by the network device, the first information to the first terminal device and/or receiving the random access preamble sequence from the first terminal device through a second frequency resource.

28. The method according to claim 26 or 27, wherein the network device comprises a first module and a second module; and
the network device sends the synchronization signal and the wake-up signal via the first module, and the network device sends the first information to the first terminal device and/or receives the random access preamble sequence from the first terminal device via the second module.

29. A communication apparatus, comprising a module or a unit configured to perform the method according to any one of claims 1 to 22, or comprising a module or a unit configured to perform the method according to any one of claims 23 to 28.

30. A communication apparatus, comprising a processor, wherein the processor is configured to execute a computer program or instructions stored in a memory, the apparatus is enabled to perform the method according to any one of claims 1 to 22, or the apparatus is enabled to perform the method according to any one of claims 23 to 28.

31. A computer-readable storage medium, wherein the computer-readable storage medium stores a computer program or instructions, and when the computer program or instructions are run on a computer, the computer is enabled to perform the method according to any one of claims 1 to 22, or the computer is enabled to perform the method according to any one of claims 23 to 28.

32. A computer program product, wherein the computer program product comprises a computer program or instructions used to perform the method according to any one of claims 1 to 22, or the computer program product comprises a computer program or instructions used to perform the method according to any one of claims 23 to 28.
